# EUROPÄISCHE PATENTANMELDUNG

(11) **EP 4 517 615 A1**
(43) Veröffentlichungstag der Anmeldung: **05.03.2025**
(21) Anmeldenummer: 24198028.3
(22) Anmeldetag: 02.09.2024
(51) Int. Cl.: G06Q 10/04, A47L 11/40, B08B 1/00, G05B 19/418, G06Q 10/0631

(54) **COMPUTERIMPLEMENTIERTES VERFAHREN ZUR ÜBERWACHUNG, OPTIMIERUNG UND PROGNOSE EINER REINIGUNGSAUFGABE, SYSTEM ZUR DATENVERARBEITUNG UND COMPUTERPROGRAMM**

(30) Priorität: 31.08.2023 EP 23194684
(71) Anmelder: Fraunhofer-Gesellschaft zur Förderung der angewandten Forschung e.V., 80686 München (DE); ADVITEC Informatik GmbH, 01069 Dresden (DE)
(72) Erfinder: Hesse, Max, 01067 Dresden (DE); Kaluza, Tim, 01189 Dresden (DE); Henze, Chris, 01069 Dresden (DE); Boye, André, 01156 Dresden (DE); Ebersbach, Norbert, 01728 Dresden (DE); Sternberg, Felix, 01097 Dresden (DE); Neubert, Patrick, 01097 Dresden (DE)
(74) Vertreter: Gottfried, Hans-Peter

(57) **Zusammenfassung**

Computerimplementiertes Verfahren zur Überwachung und Optimierung der Erfüllung einer Reinigungsaufgabe, die wenigstens einen Reinigungsschritt umfasst, sowie zur Prognose eines Reinigungsergebnisses an einem Reinigungsobjekt (222) mittels eines virtuellen Zwillings einer Reinigungsumgebung, die das Reinigungsobjekt (222) und eine Reinigungsvorrichtung (100, 201, 300) umfasst. Nach der Erfindung wird die Reinigungsaufgabe virtualisiert in dem virtuellen Zwilling ausgeführt, umfassend die Schritte: Erfassung von statischen Daten der Reinigungsumgebung zur Bildung des virtuellen Zwillings; Bereitstellen von dynamischen Daten der Reinigungsumgebung, Laden der dynamischen Daten in den virtuellen Zwilling; vollständige statische und dynamische Daten führen zur Startbereitschaft des Programmablaufs des Reinigungsvorgangs; Initiieren des virtuellen Reinigungsvorgangs im virtuellen Zwilling; Auswerten des Reinigungserfolgs nach Ablauf der Reinigungsaufgabe anhand der im virtuellen Zwilling generierten Daten; Anpassung und Änderung der dynamischen Daten im Ergebnis der Bewertung. System zur Datenverarbeitung (2), umfassend Mittel zur Ausführung des Verfahrens; Computerprogramm, umfassend Programmbefehle, die bei der Ausführung durch einen Computer (2) diesen veranlassen, das Verfahren auszuführen.

## Beschreibung

Die Erfindung betrifft ein computerimplementiertes Verfahren zur Überwachung und Optimierung der Erfüllung einer Reinigungsaufgabe, die wenigstens einen Reinigungsschritt umfasst, sowie zur Prognose eines Reinigungsergebnisses an einem Reinigungsobjekt mittels eines virtuellen Zwillings einer Reinigungsumgebung, die das Reinigungsobjekt und eine Reinigungsvorrichtung umfasst. Die Erfindung umfasst weiterhin ein System zur Datenverarbeitung und ein Computerprogramm.

### DEFINITIONEN

Das System zur Datenverarbeitung umfasst bekannte Systeme mit einem oder mehreren Prozessoren, volatilen und nichtflüchtigen Datenspeichern sowie einem Bus-System und Schnittstellen zur Verknüpfung dieser und weiterer Komponenten. Dabei ist jedoch auch eine nicht im herkömmlichen Sinn nicht computerimplementierte, sondern beispielsweise biologische Daten- bzw. Systemstruktur, wie ein DNA-Speicher, umfasst. Auch der virtuelle bzw. digitale Zwilling weist dann eine biologische Grundlage auf. Insbesondere handelt es sich in dem Fall um eine künstliche biologische Struktur, welche die Reinigungsumgebung, einschließlich Parameter und Erfahrungswerte virtuell in einem biogenen neuronalen Netz ablegt und optimierte Reinigungen vornimmt.

Der virtuelle Zwilling im Sinne der Erfindung basiert auf einem digitalem Zwilling. Ein digitaler Zwilling ist eine virtuelle Kopie eines physischen Objektes, Prozesses oder Systems. Gebildet wird diese Kopie auf Grundlage verschiedener Datenquellen. Unter dem 3D-Zwilling wird im Rahmen der Erfindung insbesondere auch ein Schattenzwilling mit hinterlegten Oberflächenmodellen verstanden. Im Übrigen nutzt der virtuelle Zwilling 2D- und/oder 3D-Umgebungen. Darüber hinaus muss es sich nicht zwangsläufig um digitale Lösungen handeln.

Eine Reinigungsaufgabe stellt ein Erfordernis dar, ein Objekt von Verunreinigungen durch Anwendung eines Reinigungsvorgangs zu befreien. Dabei werden die Reinigungsaufgabe und der angewandte Reinigungsvorgang dadurch konkretisiert, welcher Art die Verunreinigungen sind, mit welchen Mitteln sie zu entfernen sind und in welchem Maße und in welchem Umfang die Verunreinigungen entfernt werden müssen. Dies hängt in erster Linie vom Reinigungsobjekt einschließlich der dort angewandten Verfahren und verarbeiteten Stoffe ab.

Ein Reinigungsobjekt ist ein Objekt, an dem die Verunreinigungen anhaften und von dem sie bei der Erfüllung der Reinigungsaufgabe entfernt werden müssen. Im Falle biologischer Verunreinigung tritt das Erfordernis einer Desinfektion hinzu. Dabei definieren insbesondere die Anforderungen, die im Normalbetrieb an das Reinigungsobjekt gestellt werden, die Reinigungsaufgabe. So werden beispielsweise andere, höhere Anforderungen an die Sauberkeit gestellt, wenn das Reinigungsobjekt beispielsweise im Bereich der Lebensmittel- oder Arzneimittelherstellung eingesetzt ist. Das Reinigungsobjekt setzt sich aus Bereichen mit unterschiedlichen Anforderungen zusammen, die auch in einer vollständigen Ausnahme von der Reinigung liegen können.

Eine Reinigungsvorrichtung stellt mit technischen Mitteln sicher, dass die Reinigungsaufgabe erfüllt werden kann und interagiert entsprechend mit dem Reinigungsobjekt. Diese Interaktion stellt einen Reinigungsvorgang dar. Als Reinigungsvorrichtung kommen im Wesentlichen drei Gruppen von Reinigungsvorrichtungen in Betracht. Dies sind
a. stationäre Reinigungssysteme,
b. manuelle mobile Reinigungssysteme und
c. robotische bzw. automatisierte mobile Reinigungssysteme.

Stationäre Reinigungssysteme sind in einem Raum (Tank, Rohrleitung, Produktionsanlage), der regelmäßig gereinigt werden muss, fest installiert. Sie finden z. B. bei der adaptiven Tankreinigung oder zur Förderbandreinigung mittels Düsenstock, aber auch als Reinigungssysteme in Abfüllanlagen mit Schwallreinigern Anwendung.

Manuelle mobile Reinigungssysteme erfassen die Pose, d. h. Position und Orientierung eines manuellen Reinigungsgeräts, vorzugsweise einer Sprühlanze, und übermitteln diese Informationen an einen Server, welcher die Daten verarbeitet und, neben der Verwendung zur Optimierung des Reinigungsvorgangs, die gewünschte Information auf einem Endgerät darstellt. Im Betrieb findet sich die Sprühlanze bzw. das zu trackende, zu verfolgende Objekt absolut mit ihrer Position und Ausrichtung im Raum wieder. Die Daten können von der Sprühlanze an den Server zur Auswertung und für den Optimierungsprozess übertragen werden. Der Server verarbeitet die Daten und erzeugt auf Basis der Simulation einen zeitlich und örtlich aufgelösten Reinigungsverlauf. Dies wird in verschiedener Art und Weise visualisiert.

Robotische bzw. automatisierte mobile Reinigungssysteme umfassen mindestens einen Reinigungsroboter. Dieser kann vorzugsweise in zwei Ausführungen agieren. Ausführung 1 kann sich frei in der Produktionsumgebung bewegen und konzentriert sich auf die Reinigung von externen Maschinenoberflächen, Fußböden, Wänden und dem Deckenbereich. Ausführung 2 fährt auf einer Transporteinrichtung, z. B. einem Förderband, durch Produktionsanlagen hindurch, selbstständig oder fremdangetrieben (z. B. durch das Förderband), und reinigt diese von innen heraus. Beide Ausführungen verfügen über Lokalisierungssensorik, um Ihre jeweilige Umgebung wahrzunehmen (z. B. Radar-, LIDAR-, Ultraschall-, TOF-, Induktionssensorik) und die eigene Position zu den reinigungsrelevanten Elementen und Oberflächen zu ermitteln. Zusätzliche Verschmutzungssensorik, die verschiedene Sensoren zur qualitativen und/oder quantitativen Detektion von Verschmutzungen umfasst, ermöglicht die orts- und zeitaufgelöste Erfassung (z. B. mittels Fluoreszenz- und Weißlichtdetektion) der zu entfernenden Verschmutzungen. Als Sensorik werden im Rahmen der Erfindung Sensoren oder Sensoranordnungen in ihrer Gesamtheit bezeichnet.

Eine Reinigungsumgebung ist die Gesamtheit der technischen Struktur, innerhalb der die Reinigungsaufgabe ausgeführt wird. Insbesondere gehören zur Reinigungsumgebung das Reinigungsobjekt und die Reinigungsvorrichtung.

Als eine Datenstruktur bzw. Datenbank wird im Sinne der Erfindung ein Oberflächenmodell verstanden bzw. allgemein eine Datenquelle, ein Datenraum oder eine digitale Infrastruktur. Die Datenbank dient zur Ablage historischer Werte, auf die die Selbstlernalgorithmen zugreifen. Wenn nachfolgend insbesondere statische und dynamische Daten benannt sind, werden diese vorzugsweise in einer der vorgenannten Strukturen vorgehalten.

Parameter von Betriebsbedingungen der Reinigungsumgebung definieren die Interaktion zwischen Reinigungsvorrichtung und Reinigungsobjekt und werden nachfolgend als dynamische Daten bezeichnet. Insbesondere stellen sie einerseits die technischen Anforderungen des Reinigungsobjekts bei der Durchführung des Reinigungsvorgangs dar, bilden zugleich die Erfordernisse der Reinigungsvorrichtung ab und insbesondere die Betriebsbedingungen während des Reinigungsvorgangs, mit denen dann die Reinigungsaufgabe gelöst werden kann. Die dynamischen Daten sind Gegenstand der Optimierung.

Reinigungsbewegungen werden von der Reinigungsvorrichtung, insbesondere von einem zugehörigen Reinigungsgerät, wie zum Beispiel eine Sprühlanze bzw. Reinigungslanze oder eine bewegliche Düse, durchgeführt.

Virtuelle Verschmutzungen werden im Rahmen der Simulation des Reinigungsvorgangs im virtuellen Zwilling auf das virtualisierte Reinigungsobjekt in ebenfalls virtueller Form aufgebracht, sodass nach dem Aufbringen eines virtuellen Reinigungsmittels der Reinigungserfolg ebenso auf der virtuellen Ebene festgestellt werden kann.

Reinigungsmittel werden durch die Reinigungsvorrichtung abgegeben und treffen auf das Reinigungsobjekt unter definierten Bedingungen auf, um dort mit der Verschmutzung zu interagieren, diese beispielsweise an- oder abzulösen oder abzuspülen.

### STAND DER TECHNIK

Aus dem Stand der Technik, der Druckschrift EP 3 189 384 B1 ist eine Vorrichtung bekannt, die insbesondere lösbar verbunden ist mit einer Reinigungsvorrichtung. Die Vorrichtung umfasst mindestens ein Sensormittel, um die Position mindestens eines zur Reinigung verwendeten Reinigungsbereichs der Reinigungsvorrichtung zu erfassen, mindestens eine Anzeigeeinrichtung und mindestens eine mit der Anzeigeeinrichtung und dem mindestens einen Sensormittel in Wirkverbindung stehende Datenverarbeitungseinrichtung (5). Die Datenverarbeitungseinrichtung ist ausgelegt und eingerichtet, um mindestens eine Repräsentation mindestens einer zu reinigenden Oberfläche in mindestens einer ersten Farbe oder farblos anzuzeigen (29') und in Abhängigkeit von einer erfassten Veränderung der Position mindestens des Reinigungsbereichs der Reinigungsvorrichtung die zu reinigende Oberfläche in mindestens einer zweiten Farbe anzuzeigen.

Es wird vorgeschlagen, dass das mindestens eine Sensormittel einen Anpressdruck des mindestens einen Reinigungsbereichs der Reinigungsvorrichtung an die zu reinigende Oberfläche erfasst, wobei mindestens ein Schwellwert für den Anpressdruck festgelegt ist. Nur bei einem Erreichen und/oder einem Überschreiten des Schwellwerts bei einer erfassten Veränderung der Position mindestens des Reinigungsbereichs wird die zu reinigende Oberfläche in der zweiten Farbe angezeigt (29") und/oder das mindestens eine Sensormittel erfasst den Abstand des Auslasses einer Strahldüse einer Reinigungsvorrichtung von der zu reinigenden Oberfläche, den Winkel des Auslasses der Strahldüse bzw. des Strahls zu der zu reinigenden Oberfläche, die Breite und die Stärke des Strahls. Mindestens ein Schwellwert der Stärke des Strahls auf der Oberfläche ist festgelegt. Nur bei einem Erreichen und/oder einem Überschreiten des Schwellwerts bei einer erfassten Veränderung der Position der Strahldüse wird die zu reinigende Oberfläche in der zweiten Farbe angezeigt.

Allerdings erfolgt das Mapping, die digitale Erfassung in Form einer "Karte", der Umgebung beim Stand der Technik ausschließlich über die im AR-Headset (tragbares Gerät zur Darstellung von "augmented reality", bei der digitale Informationen in die reale Welt integriert werden) integrierten Sensoren. Die so erzeugte Karte ist grundsätzlich sehr grob aufgelöst und minderqualitativ. Des Weiteren erfolgt keine Speicherung und kein Abruf der Karte, sondern das Mapping wird vor und bei jeder Reinigung neu durchgeführt. In Verbindung mit den grundlegenden Messunsicherheiten und dem wiederholten neuen Neu-Mapping ergeben sich so für die Reinigung eines eigentlich identischen Objekts oder Raumes quasi jedes Mal unterschiedliche 3D-Karten. Für eine reproduzierbare und nachvollziehbare Reinigungsdokumentation ist dieser Umstand hinderlich. Zusätzlich erschwert wird dieser Ansatz durch Reinigungsspray und Dampfeinflüsse in industrieller Reinigungsumgebung. Dieser Systemansatz erscheint daher in der Praxis schwer realisierbar.

Stationäre Reinigungssysteme, manuelle mobile Reinigungssysteme und robotische bzw. automatisierte mobile Reinigungssysteme sind ebenfalls aus dem Stand der Technik bekannt, ohne jedoch weiterreichende intelligente Prüfung und Optimierung des Reinigungserfolgs zu ermöglichen. Zusätzlich beschreibt der Stand der Technik Lösungen zur Vermittlung des Reinigungserfolgs oder -fortschritts über nicht-virtuelle Lösungen (Anzeige eines digitalisierten Zustands über ein Display, z. B. AR-Headset), wie beispielsweise Vibrationseffekte. Ebenso kann ein automatisches Abschalten des Volumenstroms bei Erreichung des Referenzziels erfolgen, welches bei tagesbedingten Schwankungen des Verschmutzungszustands z. B. durch das Drücken eines Überbrückungsknopfes an der Reinigungslanze bzw. Sprühlanze außer Kraft gesetzt wird.

So beschreibt die Druckschrift EP 3 315 219 A1 eine mobile, autonome Reinigungsvorrichtung für Oberflächen in einem Anwendungsraum, insbesondere zum Einsatz innerhalb geschlossener industrieller Anlagen, umfassend wenigstens eine Löseeinrichtung zum Aufbringen eines Reinigungsmittels und/oder zum Ablösen von Anhaftungen von den Oberflächen sowie wenigstens eine Einrichtung zur Positionsbestimmung.

Die Druckschrift EP 3 950 159 A1 beschreibt ein stationäres Reinigungssystem, umfassend einen Zielstrahlreiniger, der seinerseits eine Düse zur Abgabe von Reinigungsmittel in Form eines Strahls umfasst, wobei die Düse an einem Rotationskopf angeordnet und dort mit einer Manipulationseinrichtung verbunden ist. Die Manipulationseinrichtung kann die Düse so bewegen, dass der Strahl in alle Richtungen gelenkt wird.

### AUFGABE

Es ist daher Aufgabe der Erfindung, Qualität und Nachvollziehbarkeit zu verbessern und vor allem die Prognose eines Reinigungsvorgangs zu ermöglichen.

### LÖSUNG

Die Aufgabe wird gelöst durch ein computerimplementiertes Verfahren zur Überwachung und Optimierung der Erfüllung einer Reinigungsaufgabe, die wenigstens einen Reinigungsschritt umfasst, sowie zur Prognose eines Reinigungsergebnisses an einem Reinigungsobjekt mittels eines virtuellen Zwillings einer Reinigungsumgebung. Die Reinigungsaufgabe beinhaltet insbesondere die Entfernung von Anhaftungen. Die Reinigungsumgebung umfasst das Reinigungsobjekt und eine Reinigungsvorrichtung. Die Reinigungsaufgabe umfasst wenigstens einen Reinigungsschritt.

Das Erfassen des virtuellen Zwillings erfolgt insbesondere durch Digitalisierung der Reinigungsumgebung, wodurch zunächst die statischen Daten des virtuellen Zwillings für die weitere Verarbeitung, z. B. für eine Simulation des Reinigungsvorgangs, verfügbar gemacht werden. Dazu gehören neben der Erfassung der 2D- oder 3D-Umgebung bzw. des Reinigungsobjekts ebenso die Definitionen zugehöriger kritischer Reinigungsbereiche am Reinigungsobjekt, erforderliche oder maximale Einwirkzeiten von Reinigungsmitteln und Sperrzonen, in denen keine Reinigung erfolgen darf.

Ein Bezug erfolgt zuerst auf das Reinigungsobjekt, z. B. die zu reinigende Maschine. Nachfolgend wird hinzugefügt, dass im Rahmen der statischen Daten über eine definierte Schnittstelle jede beliebige Umgebung aufgebaut werden kann. Anstelle einer unveränderlichen Karte tritt eine, die sich im Rahmen der statischen an die aktuelle Situation anpasst, beispielsweise eine Klappe, die geöffnet oder geschlossen sein kann. Auf diese Weise wird die Realität in ihrer Gesamtheit widergespiegelt, ist im Übrigen unveränderlich und schwankt demzufolge nicht von Reinigung zu Reinigung. Die statischen Daten bieten eine konstante, nachvollziehbare Dokumentationsgrundlage.

Ein Multisensorsystem (z. B. Sensor-Fusion mehrerer Lokalisierungs-Sensoren) ist nicht für das eigentliche Mapping und die Erzeugung der 3D-Umgebung notwendig, sondern dient zur Orientierung und Matching (logische Übereinstimmung) der erkannten Eigenschaften bzw. Reinigungsleistungen. Durch den Multisensor-Ansatz ist die Messgrundlage zudem auch in schwierigen industriellen Umgebungen deutlich robuster und genauer.

Vorteil dieses Ansatzes ist, dass in dem virtuellen Zwilling so bereits vorab wertvolle Prozessinformationen zugeteilt werden können. Dies können von Seiten des Maschinenherstellers Informationen über reinigungskritische Bereiche sein, welche bedingt durch Geometrie oder typische Verschmutzungszustände eine höhere Reinigungsintensität fordern. Im Gegensatz dazu werden auch Informationen darüber verfügbar gemacht, welche Bereiche besonders sensibel sind und beispielsweise mit weniger Sprühdruck oder bestimmten Chemikalien gereinigt werden sollen (z. B. Dichtungsstellen o. ä.).

Das Konzept des virtuellen Zwillings lässt darüber hinaus auch Live-Schnittstellen und Rückkopplungen zum laufenden Prozess, insbesondere dem Reinigungsvorgang, zu. So können aus den Maschinensteuerungen beispielsweise Daten zum verarbeiteten Produkt oder Prozessparameter (z. B. Temperaturen) ausgelesen werden, welche die Reinigungsintensität maßgeblich beeinflussen können.

So kann eine dynamische, adaptive Referenz- und Empfehlungsumgebung für den Nutzer geschaffen werden. Diese adaptive Umgebung des virtuellen Zwillings kann mit der Kopplung an entsprechende KI-Module ergänzt werden, welche dann ein kontinuierlich selbstlernendes System schaffen, das maßgeblich vom reproduzierbar stabilen Modellansatz der 3D-Umgebung profitiert. Über geeignete Schnittstellen kann auch das vorhandene Bedienerwissen gesammelt und in die allgemein verfügbare und für vergleichbare Reinigungsobjekte angewendete Referenzreinigung einfließen.

Alle denkbaren Fälle werden durch den virtuellen Zwilling abgedeckt, z. B. auch Reinigung nach einer Störung. Die Funktion des erfindungsgemäßen Systems erfolgt grundsätzlich lokal, optional nach einer vorteilhaften Weiterbildung auch vernetzt, sodass die Erfahrungen gleichartiger Anlagen in einen gemeinsamen virtuellen Zwilling einfließen, auf den dann wiederum von allen Anlagen gleichermaßen zugegriffen wird.

Nach der Erfindung wird die Reinigungsaufgabe virtualisiert in dem virtuellen Zwilling bzw. durch den virtuellen Zwilling bzw. als virtueller Zwilling im Server, auf dem der virtuelle Zwilling als Computerprogramm läuft, ausgeführt. Das Verfahren umfasst die Schritte:
a. Erfassung von statischen Daten der Reinigungsumgebung zur Bildung einer statischen, insbesondere während der Reinigungsaufgabe unveränderlichen Grundstruktur des virtuellen Zwillings, wobei die Reinigungsumgebung Spezifikationen von Reinigungsvorrichtung, Reinigungsmittel und Reinigungsobjekt umfasst;
b. Bereitstellen von dynamischen Daten, von Betriebsbedingungen, der Reinigungsumgebung, beispielsweise in einer Datenbank,
c. Laden der dynamischen Daten in den virtuellen Zwilling zur Bildung einer dynamischen der dann vollständig, aktuell und betriebsbereit ist;
d. vollständige statische und dynamische Daten führen zur Startbereitschaft des Programmablaufs des Reinigungsvorgangs;
e. Initiieren des virtuellen Reinigungsvorgangs im virtuellen Zwilling, Ausführen der vollständigen virtuellen Reinigung;
f. Auswerten des Reinigungserfolgs nach Ablauf der Reinigungsaufgabe, zumindest des wenigstens einen Reinigungsschritts sowie aller weiteren vorgesehenen Reinigungsschritte, anhand der im virtuellen Zwilling vorliegenden oder generierten Daten;
g. Anpassung und Änderung der dynamischen Daten im Ergebnis bzw. in Abhängigkeit von der Bewertung in Schritt f), beispielsweise Speichern der geänderten dynamischen Daten in einer Datenbank;

Die Darstellung von Einwirkzeit und zugehörigen Farbänderungen in einer Mensch-Maschine-Schnittstelle (nachfolgend HMI, kurz für englisch *Human Machine Interface*) kann in Abhängigkeit von der Zeit erfolgen. Auf Basis der erfassten statischen Daten der Reinigungsumgebung erfolgen später Berechnungen, Planungen, Verwaltung und Optimierungen durchzuführender Handlungen und Handlungsabfolgen der Reinigungsschritte während des Reinigungsvorgangs. Weiterhin erfolgen Berechnungen, Planungen und Rückkopplungen zu ausstehenden Reinigungshandlungen bzw. noch erforderlichen Volumenstromaufträgen als Reinigungsschritt oder innerhalb eines Reinigungsschritts. Auch hier kann eine Darstellung über ein HMI erfolgen, beispielsweise visuell und/oder haptisch und/oder akustisch. Eine haptische Darstellung erfolgt beispielsweise über eine Vibration im Handgriff einer Reinigungslanze bzw. Sprühlanze.

Vorgesehen ist weiterhin die Einbeziehung zusätzlicher Komponenten und Informationen (beispielsweise auch zusätzliche, z. B. bewegliche Reinigungsobjekte, Räumlichkeiten, Reinigungspläne, weitere Kl-Tools) über Schnittstellen. Ebenso sind ein dynamisches Mapping (Erstellen der digitalen Flächen- bzw. Raumdefinition) und die Dokumentation durchgeführter Reinigungsvorgänge oder Volumenstromaufträge vorgesehen.

Die Erfindung ermöglicht auch dynamische Optimierungen von Reinigungsvorgängen und Schulungen des Bedienpersonals. In Betracht kommen auch eine flexible Verteilung von Sensoren (beispielsweise Clip-On-Sensoren, Drohnen, Kameras, Brillen etc.) und/oder deren kombinierte Verwendung als ein Multisensor-System.

Zur Ausführung einer Reinigungsaufgabe, insbesondere der Reinigung von Oberflächen, ist die Reinigungsvorrichtung, umfassend ein Reinigungsmittel, ein Reinigungsgerät, eine Sensoranordnung, eine Steuerungseinrichtung und eine Anzeigeeinrichtung vorgesehen. Die Steuerungseinrichtung weist vorzugsweise eine Datenbank zur Speicherung von Reinigungsabläufen, den dynamischen Daten auf. Der virtuelle Zwilling der Reinigungsvorrichtung ist in seiner Grundstruktur durch die statischen Daten definiert.

Die statischen Daten umfassen vorzugsweise Elemente der Reinigungsumgebung sowie deren dauerhaft gültige Reinigungsparameter, wie z. B. zugehörige Subjekte, Objekte, Reinigungsvorrichtung und Sensorik. Zugehörige dynamische Daten bzw. Parameter betreffen beispielsweise Position, Maße, Winkel, Strukturen, Oberflächen und die Bewegungen beweglicher Elemente sowie auch das Reinigungsmittel betreffende Eigenschaften. Die statischen Daten umfassen weiterhin vorzugsweise eine Beschreibung eines Reinigungsgeräts als Teil der Reinigungsvorrichtung, beispielsweise die Charakteristika der genutzten Düse zur Abgabe des Reinigungsmittels sowie weitere Eigenschaften des Arbeitsbereichs.

Zugehörige dynamische Daten bzw. Parameter betreffen in diesem Fall beispielsweise einen Abstand zu Reinigungsobjekt, eine Pose (d. h. Position und Winkel). Dynamische Daten beschreiben weiterhin die Parameter der Reinigungsmittel, beispielsweise deren Zusammensetzung, Konsistenz, Temperatur, Reinigungsleistung pro Zeit, minimale und maximale Einwirkzeit. Weiterhin ist in der Gruppe der dynamischen Daten der Reinigungsmittelauftrag und ggf. dessen Abfluss abgelegt, wobei als die Parameter beispielsweise Volumenstrom des Reinigungsmittels je Zeiteinheit, das Sprühbild, den Sprühwinkel umfassen. Entsprechend dem erfindungsgemäßen Verfahrensablauf erfolgt die zugehörige zyklische Aktualisierung von Veränderungen. Die statischen und die dynamischen Daten liegen in mittels Computer verarbeitbarer Form vor.

Ein weiterer Teil der Reinigungsvorrichtung betrifft Eingabe-, Änderungs-, Lösch- und Ausgabemöglichkeiten bzw. -mittel (wie AR-/VR-Brillen, Smartphones, Wearables, Kameras, Projektoren, akustischen und haptischen Möglichkeiten), die in ihren Eigenschaften ebenfalls durch statische Daten beschrieben werden und im Rahmen der Erfindung als HMI zusammengefasst bezeichnet werden. AR-Brillen ermöglichen es, digitale Informationen in die reale Welt zu integrieren, beispielsweise über die real sichtbare Umgebung zu blenden. VR-Brillen erzeugen eine computergenerierte Umgebung, die eine realitätsnahe Erfahrung bietet, indem sie den Benutzer in eine virtuelle Welt eintauchen lässt. Die Eingabe- und Ausgabemittel dienen zur Unterstützung, Steuerung, Entscheidungsfindung und Dokumentation von Reinigungsvorgängen und vorzugsweise auch der Erkennung von Verschmutzungen.

Die erfindungsgemäße Lösung dient der Verbesserung des Reinigungsvorgangs bei manueller Reinigung sowie bei mobilen oder stationären selbsttätigen Reinigungsvorrichtungen, wie z. B einem Tankreiniger oder Reinigungsrobotern. Die Reinigungsparameter, wie z. B. Volumenstromauftrag, sollen ortsaufgelöst und/oder zeitabhängig und/oder zustandsabhängig optimal ermittelt bzw. bestimmt werden. Die Reinigungsvorrichtung umfasst nach einer vorteilhaften Weiterbildung einen virtuellen Zwilling, sowohl für 2D- als auch für 3D-Umgebungen, mit dem sie verknüpft ist und der auf eine Datenbank mit gespeicherten Reinigungsparametern, beispielsweise ortsaufgelöst an ein 3D-CAD-Modell geknüpft, sowie manuell implementiertes Expertenwissen (z. B. maschinenseitig vom Anlagenhersteller, verfahrensseitig vom Lebensmittelproduzenten) zugreift und in die Datenbank speichert.

Damit kann nicht nur auf manuell implementiertes Expertenwissen und die gespeicherten Reinigungsparameter zurückgegriffen werden. Es soll auf eine Datenbank im weitesten Sinne, insbesondere auf dynamische Daten, die den Reinigungsvorgang beschreiben, und statische Daten, die die Reinigungsumgebung beschreiben, inklusive weiterer Quellen, zugegriffen werden. Dies beinhaltet nicht nur Informationen, die manuell entstanden sind, sondern auch automatisch, beispielsweise durch KI generierte Daten. Das Expertenwissen soll dabei nicht nur maschinenseitig vom Anlagenhersteller und/oder verfahrenstechnisch vom Lebensmittelproduzent stammen, sondern auch aus anderen Quellen resultieren. Dieses Expertenwissen soll der Reinigungsvorrichtung, mit zugehörigem Speicher und Datenverarbeitungsvorrichtung auch über Schnittstellen zugeführt werden.

Zudem sind bei der Reinigungsvorrichtung nach einer vorteilhaften Ausführungsform Aspekte der allgemeinen Protokollierung bzw. Reinigungsdokumentation berücksichtigt. Neben der Bereitstellung der Informationen für die schrittweise Selbstoptimierung des Systems gehören dazu auch die Schnittstelle zum Nutzer bzw. zum Unternehmen, um die vorhandenen Daten (z. B. für Audits etc.) aufrufen und auswerten zu können.

Der erfindungsgemäße Ansatz steht hinsichtlich der Genauigkeit auf deutlich robusteren Beinen als der Stand der Technik und bietet darüber hinaus deutlichen Mehrwert für den Endanwender, nicht zuletzt auch hinsichtlich verfügbarer Informationen. Grundlage ist hier das Konzept eines virtuellen oder digitalen Zwillings. Bereits vorab, während der Inbetriebnahmephase eines solchen Systems, wird ein präzises 3D-Modell der Umgebung oder der zu reinigenden Objekte erzeugt. In dieses fließt auch das Vorwissen, z. B. das des Herstellers der Anlage, ein.

Das so geschaffene Gesamtsystem verfügt also nicht nur über wertvollen Initialinput im Umfang der statischen Daten, welcher dem virtuellen Zwilling bereits herstellerseitig oder während der Phase der Inbetriebnahme als Grundstruktur eingepflanzt werden kann, sondern auch über geeignete Feedbackschleifen sowohl zum Maschinenprozess als auch dem menschlichen Bediener im Falle von manuellen Reinigungssystemen. Insgesamt entsteht so ein genaueres System mit deutlich besser reproduzierbaren Ergebnissen, was dem Endnutzer deutliche Vorteile bietet.

Ein virtueller 3D-Zwilling für Reinigungsanwendungen kann auch für Reinigungsrobotik, als automatisierte Reinigungsvorrichtungen, und weitere Anwendungen verwendet werden. Im Gegensatz zum Stand der Technik erfolgen bei der Erfindung Informationsaustausch und -verarbeitung in beide Richtungen, von der Reinigungsvorrichtung zum virtuellen Zwilling und umgekehrt, sowie vorzugsweise auch als "simulation-in-the-loop" (Optimierung durch Simulationsschleifen, für einzelne Reinigungsschritte sowie auch für den gesamten Reinigungsvorgang).

Die Integration von Verschmutzungs- und Reinigungsmodellen, die Vorgaben und Erfahrungswerte beinhalten und Parameter wie zu behandelnde Stoffe (Verarbeitungsgut) und Prozessparameter einbeziehen, hat sich als vorteilhaft erwiesen. Darüber wird eine standardisierte Systemmodellierung beschrieben. Diese kann den Vorgaben im Kontext der Industrie 4.0 mit der systematischen Integration (Datenmodellierung etc.) in eine Asset Administration Shell (AAS) folgen. Für diese Verschmutzungs- und Reinigungsmodelle werden neben den mathematischanalytischen Modellen auf Basis der Parameter auch die Oberflächen (aufgelöst auf Bauteilebene) der Maschinen hinterlegt, sodass eine umfassende Beschreibung und Bewertung des virtuellen Zwillings im Umfang der statischen Daten ortsaufgelöst realisiert werden kann.

Durch die Realisierung des virtuellen Zwillings im industriellen Kontext über AAS wird eine dynamische Reinigungsvorgabe lokal auf der Oberfläche auf den gesamten Anlagenkomplex auf Basis der aktuellen Verschmutzung dynamisch abgebildet. Damit ist auch eine Vorhersage des Reinigungsbedarfs möglich. Die Qualität des virtuellen Zwillings ist in seiner Gesamtheit nicht starr, sondern wird durch Rückkopplung kontinuierlich angepasst, speziell die dynamischen Daten. Aus dem virtuellen Zwilling lassen sich beliebige Visualisierungen für Training von Bedienern oder Validierungs- oder Unterstützungszwecke zeitlich unabhängig (historisch, als Vorhersage oder in Echtzeit) ableiten. Für die Rückkopplung kommt z. B. gemessener bzw. protokollierter Reinigungsaufwand (z. B. durch Bediener) in Betracht.

Nach einer vorteilhaften Weiterbildung des erfindungsgemäßen Verfahrens wird die Reinigungsaufgabe parallel in der Reinigungsumgebung und virtualisiert in dem virtuellen Zwilling ausgeführt. Die Reinigungsvorrichtung als Teil der Reinigungsumgebung führt den Reinigungsvorgang aus. Dabei werden die folgenden zusätzlichen Schritte im Anschluss an Schritt d) des oben beschriebenen Verfahrens ausgeführt:
Schritt d1) umfasst die Übertragung zumindest der dynamischen Daten, die insbesondere den Reinigungsvorgang beschreiben, auf die reale Reinigungsvorrichtung;
Schritt e1) umfasst die Ausführung des wenigstens einen Reinigungsschritts als Teil des gesamten Reinigungsvorgangs in der realen Reinigungsumgebung mit der Reinigungsvorrichtung, die auf das Reinigungsobjekt einwirkt, zeitgleich und parallel mit dem Ablauf desselben wenigstens einen Reinigungsschritts des virtuellen Reinigungsvorgangs im virtuellen Zwilling der virtualisierten Reinigungsumgebung mit der virtualisierten Reinigungsvorrichtung, die auf das virtualisierte Reinigungsobjekt einwirkt;
Schritt e2) umfasst die Gewinnung von Sensordaten aus der realen Reinigungsvorrichtung während des Ablaufs des wenigstens einen Reinigungsschritts (die Sensordaten betreffen sowohl die Pose einer mobilen Sprühlanze als auch sämtliche andere erfassbare Betriebsparameter, die die dynamischen Daten bilden);
Schritt e3) umfasst die Übertragung der Sensordaten, vorzugsweise auf ein entsprechendes Modul, zur Echtzeitbewertung des Reinigungsfortschritts im aktuellen Reinigungsschritt, insbesondere Bewerten des Reinigungserfolgs nach Ablauf bzw. während des wenigstens einen Reinigungsschritts durch Verknüpfung der Sensordaten aus der Reinigungsvorrichtung und der parallel im virtuellen Zwilling generierten Daten;
Schritt e4) umfasst die Anpassung und Änderung von dynamischen Daten in Abhängigkeit von der Bewertung in Schritt e3) und vorzugsweise Speichern der geänderten dynamischen Daten zur erneuten Übertragung an den virtuellen Zwilling, und Laden der dynamischen Daten in den virtuellen Zwilling, um einen optimierten neuen Ablauf des Reinigungsschritts initiieren zu können;

Diese zusätzlichen Verfahrensschritte werden gefolgt von einem erneuten Ablauf von Schritt b) und den folgenden Schritten, insbesondere den Schritten c, d, d1, e, e1, f, e2, e3 und e4 gemäß obiger Beschreibung des Verfahrensablaufs zur Optimierung des aktuellen Reinigungsschritts.

Der erneute Ablauf, die Loopfunktion ist grundlegend und im Überblick charakterisiert durch folgende Kriterien:
- ein Istzustand ist abgelegt, ein Feedback wird bereitgestellt,
- zu frühe Ausführung, z. B. vor dem Ende der vorgesehenen Einwirkzeit, wird verhindert,
- je nach durch die zu reinigende Anlage durchgelaufenem Produkt wird unter Berücksichtigung von Erfahrungswerten der Reinigungsvorgang angepasst.

Im erweiterten Sinne ergibt sich daraus:
1. Vorabschätzung bzw. Ermittlung orts- und/oder zeitaufgelöster Startparameter und projizierter Reinigungsparameter, z. B. durch Prozesssimulation, manuelle Eingabe, existierendes Benutzerwissen, angekoppelte selbstlernende KI-Module (in deren Training z. B. Prozesssimulationen und Benutzerwissen einfließen kann);
2. Kontinuierlicher Abgleich Soll-/Ist-Parameter während des Reinigungsvorgangs;
3. Reaktion des Systems auf unvorhergesehene Ereignisse bzw. Abweichungen bei Soll-/Ist-Parametern (z. B. prognostizierte Reinigungsspurbreite) mit automatischer Nachkorrektur (=Inline-Anpassung, d. h. unmittelbar nach dem aktuellen Reinigungsschritt, der ursprünglich ausgehandelten Reinigungsstrategie);
4. Feedbackschleife: kontinuierliches Lernen aus Soll/Ist-Parameterabweichungen und ggfs. automatisiertes Anpassen und Trainieren der Simulations- und Vorabschätzungsmodelle bzw. der Modelle zur Startparameterwahl.

Vorzugsweise erfolgt wenigstens ein erneuter Ablauf der Schritte b) und folgende zur Optimierung der gesamten Reinigungsaufgabe.

Als die dynamischen Daten werden vorzugsweise erfasst und verarbeitet:
a. Positionen und/oder Bewegungen wenigstens
   i. eines Reinigungsobjekts, umfassend eine zu reinigende Oberfläche und/oder ein zu reinigendes Objekt im Raum,
   ii. einer Reinigungsvorrichtung, umfassend ein Reinigungsgerät, z. B. eine Sprühlanze,
   iii. eines Manipulators, wobei der Manipulator einen Roboter, eine Drohne und/oder einen Bediener umfasst,
b. Eigenschaften und Anwendungsrestriktionen eines Reinigungsmittels;
c. Bereiche zur Zuordnung von spezifischen Reinigungsabläufen am Reinigungsobjekt, umfassend Bereiche ohne Reinigung und Bereiche intensiver Reinigung;
d. Sensordaten, ermittelt beim Betrieb der Reinigungsvorrichtung;
f. Abstand zwischen Reinigungsgerät und Oberfläche;
g. Aufprallwinkel, Druck, Temperatur und/oder Volumenstrom des Reinigungsmittels.

Es hat sich, insbesondere zur effektiven Simulation, als vorteilhaft erwiesen, wenn die dynamischen Daten weiterhin Informationen zum Aufbringen simulierter virtueller Verschmutzungen auf spezifische, virtualisierte Bereiche des Reinigungsobjekts umfassen. Damit kann im virtuellen Reinigungsvorgang festgestellt werden, ob die Reinigung erfolgreich verläuft, beispielsweise mit einer bestimmten Pose der Sprühlanze in Bezug auf Abschattungen der zu reinigenden Oberfläche durch Einbauten.

Besonders bevorzugt ist es vorgesehen, dass die dynamischen Daten weiterhin ein Anwenden von virtuellen Reinigungsmitteln mit zugeordneten Eigenschaften und vorgegebenen Anwendungsrestriktionen umfassen. Damit kann im virtuellen Reinigungsvorgang festgestellt werden, ob die Reinigung mit dem gewählten Reinigungsmittel und dessen spezifischen Eigenschaften erfolgreich verläuft.

Es hat sich weiterhin als vorteilhaft erwiesen, wenn der Umfang der dynamischen Daten Informationen über vorausgegangene reale Reinigungsabläufe der realen Reinigungsvorrichtung umfasst, die durch Sensoren der realen Reinigungsvorrichtung aufgenommen wurden und/oder als Schritte im Programmablauf der Steuerungseinrichtung der realen Reinigungsvorrichtung vorliegen. Damit wird ein Abgleich der Simulation mit der realen Ausführung möglich, wenn beispielsweise reale Posedaten einer Sprühlanze mit den Sensordaten des Verschmutzungssensors sowie weiteren Daten, die das Aufbringen des Reinigungsmittels beschreiben (Druck, Temperatur, Einwirkzeit), zu einem Gesamtbild verknüpft werden. Dieses Gesamtbild kann dann mit dem Ergebnis der Simulation abgeglichen werden.

Es hat sich als vorteilhaft erwiesen, wenn die Erfassung der statischen Daten des virtuellen Zwillings als Abbild der Reinigungsumgebung mittels eines computerimplementierten Verfahrens erfolgt, umfassend die Schritte
a. Ermitteln und Digitalisieren wenigstens eines Reinigungsobjekts als 2D-oder 3D-Struktur, wobei die Ermittlung auch zuvor erfolgen und aus anderen Quellen vorhandene Strukturdaten genutzt werden können,
b. Definition von Bereichen zur Zuordnung von spezifischen Reinigungsabläufen ohne Reinigung, intensive Reinigung, Einwirkzeit in der 2D-oder 3D-Struktur,
c. Einbeziehen von nachfolgend näher beschriebenen Zusatzinformationen, die nicht in der Datenstruktur gespeichert sind.

Vorteilhafterweise sind als Zusatzinformationen wenigstens eine der folgenden Informationen vorgesehen:
a. KI-basierte Informationen in Bezug zu der Reinigungsaufgabe;
   KI-basierte Informationen können erlangt werden durch Lösungen zur Vermittlung des Reinigungserfolgs/-fortschritts über nicht-virtuelle Lösungen (Anzeige eines digitalisierten Zustands über ein Display, z. B. AR-Headset), wie beispielsweise Vibrationseffekte. Ebenso kann ein automatisches Abschalten des Volumenstroms bei Erreichung des Referenzziels erfolgen, welches bei tagesbedingten Schwankungen des Verschmutzungszustands z. B. durch das Drücken eines Überbrückungsknopfes an der Reinigungslanze bzw. Sprühlanze außer Kraft gesetzt wird. Wenn man z. B. diesen Vorgang trackt (nachverfolgt) und die Anzahl der Overrides (Abweichen vom vorgesehenen Programmablauf durch Eingreifen des Bedieners) in einem bestimmten Bereich stetig hoch ist, kann ein KI-System über eine geeignete Feedbackschleife automatisch erkennen, dass hier eine Anpassung der Referenzreinigung vorzunehmen ist und entsprechende Empfehlungen vorgeben.
b. regelbasierte Steuerungsschritte der Reinigungsvorrichtung;
   Ursprüngliche, regelbasierte Steuerungsschritte der Reinigungsvorrichtung fließen ebenfalls als Zusatzinformationen ein, sind sie doch die Basis des im Rahmen der Erfindung zu optimierenden Reinigungsablaufs.
c. Maschinen-, Experten-, Düsendatenbanken und -programme der Reinigungsvorrichtung;
   Hierbei fließen Daten ein, die bereits auf unterschiedliche Weise generiert wurden und im Zuge der Nutzung im erfindungsgemäßen Verfahren aufbereitet wurden. Dies betrifft Daten zur zu reinigenden Maschinen, dem Reinigungsobjekt, ebenso wie Daten zur Reinigungsvorrichtung, insbesondere den darin verwendeten Düsen, sowie andere verfügbare Quellen.
d. Bewegungsmuster von Robotiksystemen;
   Bekannte und in anderen Bereichen der Technik bewährte Bewegungsmuster von Robotiksystemen können effektiv eingesetzt und an die Reinigungsaufgabe iterativ adaptiert werden, ohne das Bewegungsmuster von Grund auf neu erstellen zu müssen.
e. Messwerte aus Sensorik sowie Kamerabilder;
   Neben den Positions- und den Verschmutzungssensoren kommen zur ergänzenden Generierung von Informationen weitere Sensoren in Betracht. Wichtigen Raum nimmt dabei die Detektion von Personen, die sich dem Arbeitsbereich der Reiniger nähern, ein.
f. weitere 2D- oder 3D-Daten von Objekten in der Reinigungsumgebung;
   Dies betrifft insbesondere Einbauten und mobile Objekte im Reinigungsobjekt, aber auch weitere Reinigungsvorrichtungen, z. B. stationäre Reinigungsvorrichtungen im Reinigungsobjekt.
g. weitere Mess- und Vorgabewerte in der Reinigungsumgebung;
   Dies betrifft beispielsweise Oberflächentemperaturen am Reinigungsobjekt, aber auch Einsatzbedingungen des Reinigungsmittels, z. B. dessen Konzentration.
h. manuell implementiertes Expertenwissen in Bezug zu der Reinigungsaufgabe;
   Soweit keine historischen Erfahrungen aus früheren Reinigungsvorgängen und keine der oben genannten Informationen aus anderen Quellen zu bestimmten Fragen der Verfahrensgestaltung vorliegen, können die erforderlichen Daten auch manuell eingearbeitet werden.
i. menschliche Bewegung in der Reinigungsumgebung.

Die menschliche Bewegung in der Reinigungsumgebung stellt besondere Anforderungen an ein System, weil diese Bewegungen nicht vorhersehbar sind. Dennoch muss das System, zumindest aus Gründen der Arbeitssicherheit hierauf reagieren. Entsprechende Algorithmen sind vorzusehen, so wie bei jedem Einsatz von Robotern. Die menschliche Bewegung betrifft auch die Reinigungsbewegung des Bedieners, mit der er z. B. eine Sprühlanze führt. In dem Fall muss eine Optimierung der menschlichen Bewegung erreicht werden, was durch unmittelbare Rückkopplung über das HMI oder auf andere Weise, z. B. in Form einer Auswertung des gesamten Reinigungsvorgangs, erfolgt.

Es hat sich als vorteilhaft erwiesen, wenn das manuell implementierte Expertenwissen maschinenseitig zufließt und dabei Restriktionen des Reinigungsobjekts umfasst und/oder verfahrenstechnisch zufließt und dabei Restriktionen des in Bezug auf das Reinigungsobjekt durchgeführten Verfahrens umfasst. Bevorzugt bilden die Düsendatenbanken und -programme Strahlgeometrien und Strömungsverhältnisse von Düsen der Reinigungsvorrichtung ab, aus denen das Reinigungsmittel auf das Reinigungsobjekt abgegeben wird.

Vorzugsweise erfolgt im virtuellen Zwilling eine Definition von Ausgabesignalen zur Anzeige von Betriebszuständen auf wenigstens einem HMI.

Die bevorzugte reale Reinigungsvorrichtung ist ausgeführt als
a. ein stationäres Reinigungssystem (z. B. fest installierter Tankreiniger) oder
b. ein robotisches, automatisiertes mobiles Reinigungssystem (z. B. manuelles, mobiles Sprühreinigungssystem) oder
c. ein manuelles, mobiles Reinigungssystem (z. B. mobiler Reinigungsroboter).

Die Aufgabe der Erfindung wird weiterhin gelöst durch ein System zur Datenverarbeitung, umfassend Mittel zur Ausführung des Verfahrens, wie zuvor beschrieben und nach einem der Ansprüche 1 bis 13. Das System zur Datenverarbeitung, bei der Beschreibung der Ausführungsbeispiele auch als Server bezeichnet, weist gemäß der einleitend vorgenommene Definition Speichereinrichtungen auf, in denen zumindest die statischen und die dynamischen Daten gespeichert und zur Verarbeitung in einem oder mehreren Prozessoren vorgehalten werden.

Die Aufgabe der Erfindung wird weiterhin gelöst durch ein Computerprogramm, umfassend Programmbefehle, die bei der Ausführung durch einen Computer diesen veranlassen, das Verfahren, wie zuvor beschrieben und nach einem der Ansprüche 1 bis 13 auszuführen. Hierzu wird in einer geeigneten Programmiersprache ein Computerprogramm angeboten, dass die Verfahrensschritte aus einem der Ansprüche 1 bis 13 umfasst. Das Computerprogramm wird in einer Speichereinrichtung des Systems zu Datenverarbeitung gespeichert, um auf den Prozessoren dieses Systems ausgeführt zu werden.

### VORTEILE

Die Erfindung mit ihrem Verfahren zur Ermittlung der optimalen Reinigungsparameter trägt entscheidend zur Verbesserung des Reinigungsergebnisses bei. Besondere Vorteile liegen darin, dass
- Spritzschatten eliminiert werden,
- die Einwirkzeit von Schaum oder chemischen Reinigungsmitteln exakt und reproduzierbar eingehalten wird (Sollzeit),
- Einhaltung von spezifischen Volumenströmen (z. B. 10 l/m²),
- zu geringe Reinigung und Hygieneprobleme werden vermieden,
- der Einsatz von unnötig hohem Reinigungsaufwand wird vermieden, Ressourcen werden eingespart,
- Schutz von empfindlichen Bereichen (z. B. Displays, Dichtungen, Sensoren, Steuerungseinrichtung) wird erreicht, indem diese von der Reinigung ausgenommen werden bzw. die Reinigungsintensität (z. B. Betriebsdruck der Düse in Abhängigkeit vom Düsenabstand zur Oberfläche) lokal auf die maximal zulässigen Werte reduziert wird,
- Reinigungsmedien werden speziell dort angewendet, wo die Anwendung auch planmäßig vorgesehen ist,
- Reinigungsort und Reinigungsstufe werden exakt eingehalten,
- Abschalten der Reinigungsdüsen bei Fehlbedienung oder -funktion inklusive Fehlermeldung (optional ortsbezogen) zur Erhöhung der Arbeitssicherheit und einer schnellen Wiederherstellung des optimalen Betriebszustands. Bei einer Fehlbedienung einer Reinigungslanze oder Sprühlanze wird diese z. B. abgeschaltet, wenn der Bediener diese auf nicht zu reinigende Bereiche, nach oben oder gar auf andere Personen richtet.
- mittels des virtuellen Zwillings und den implementierten 2D- und/oder 3D-Umgebungen wird die intelligente Arbeitsteilung zwischen Mensch und Reinigungsroboter (aber auch anderen statischen oder dynamischen Reinigungssystemen) möglich.

### AUSFÜHRUNGSBEISPIELE

Anhand der Beschreibung von Ausführungsbeispielen und ihrer Darstellung in den zugehörigen Zeichnungen wird die Erfindung nachfolgend näher erläutert. Es zeigen:
Fig. 1: schematisch ein Verfahrensschema einer Ausführungsform des erfindungsgemäßen Verfahrens einer Optimierung des Reinigungsvorgangs ausschließlich im virtuellen Zwilling;
Fig. 2: schematisch ein Verfahrensschema einer Ausführungsform des erfindungsgemäßen Verfahrens einer Optimierung des Reinigungsvorgangs im virtuellen Zwilling während des realen Reinigungsvorgangs;
Fig. 3: schematisch ein weiteres Verfahrensschema einer Ausführungsform des erfindungsgemäßen Verfahrens einer Optimierung des Reinigungsvorgangs mit einem mobilen Reiniger;
Fig. 4: schematisch ein weiteres Verfahrensschema einer Ausführungsform des erfindungsgemäßen Verfahrens einer Optimierung des Reinigungsvorgangs mit einem mobilen Reiniger;
Fig. 5: schematisch eine perspektivische Ansicht einer Ausführungsform einer Reinigungsvorrichtung, ausgeführt als stationäres Reinigungssystem, speziell einen Tankreiniger;
Fig. 6: schematisch eine Seitenansicht einer Ausführungsform einer Reinigungsvorrichtung, ausgeführt als autonomes mobiles Reinigungsgerät und
Fig. 7: eine schematische Ansicht einer Ausführungsform einer Reinigungsvorrichtung, ausgeführt als manuelles mobiles Reinigungssystem.

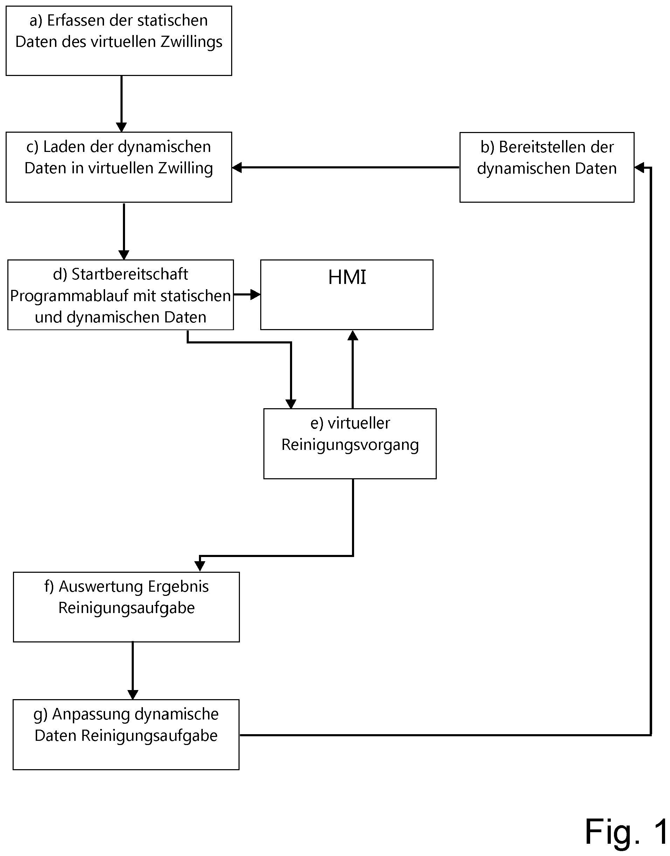

Fig. 1 zeigt schematisch ein Verfahrensschema einer Ausführungsform des erfindungsgemäßen Verfahrens einer Optimierung des Reinigungsvorgangs ausschließlich im virtuellen Zwilling. Hierzu werden in Schritt a) zunächst die statischen Daten erfasst, die eine Art Grundstruktur des virtuellen Zwillings repräsentieren. Dies betrifft alle während des Reinigungsvorgangs zwangsläufig unveränderlichen Werte, wie zum Beispiel die Dimensionen des Reinigungsobjekts und der Reinigungsvorrichtung, somit die Definition der gesamten Reinigungsumgebung. Insbesondere zählen dazu auch Teile des Reinigungsobjekts, die von besonderer Bedeutung sind, wie zum Beispiel auskragende Teile, die beim Aufsprühen von Reinigungsmittel einen Sprühschatten hervorrufen können. Darüber hinaus sind beispielsweise auch weitere im Wesentlichen unveränderliche Eigenschaften der Reinigungsvorrichtung, wie zum Beispiel der maximal erreichbare Druck, mit dem das Reinigungsmittel ausgebracht werden kann, oder das Sprühbild einer fest in der Reinigungsvorrichtung installierten Düse. Die einmal erfassten statischen Daten des virtuellen Zwillings können, sofern keine Veränderungen an der Reinigungsumgebung vorgenommen wurden, ohne erneute Erfassung unmittelbar genutzt werden, um den virtuellen Zwilling für die nachfolgenden Schritte vorzubereiten.

Der durch Aufnahme der statischen Daten entsprechend vorbereitete virtuelle Zwilling wird nun komplettiert durch das Laden der dynamischen Daten in Schritt c), beispielsweise aus einer Datenbank oder auf andere Weise in Schritt b) bereitgestellten dynamischen Daten.

Sind die dynamischen Daten zu den bereits vorhandenen statischen Daten geladen, entsteht gemäß Schritt d) die Startbereitschaft des Programmablaufs im virtuellen Zwilling. Dies wird auch optional in einem HMI, beispielsweise auf einem Bildschirm, dargestellt, beispielsweise durch eine Virtualisierung des Reinigungsobjekts, wobei die Färbung der Flächen anzeigt, dass diese noch nicht gereinigt wurden.

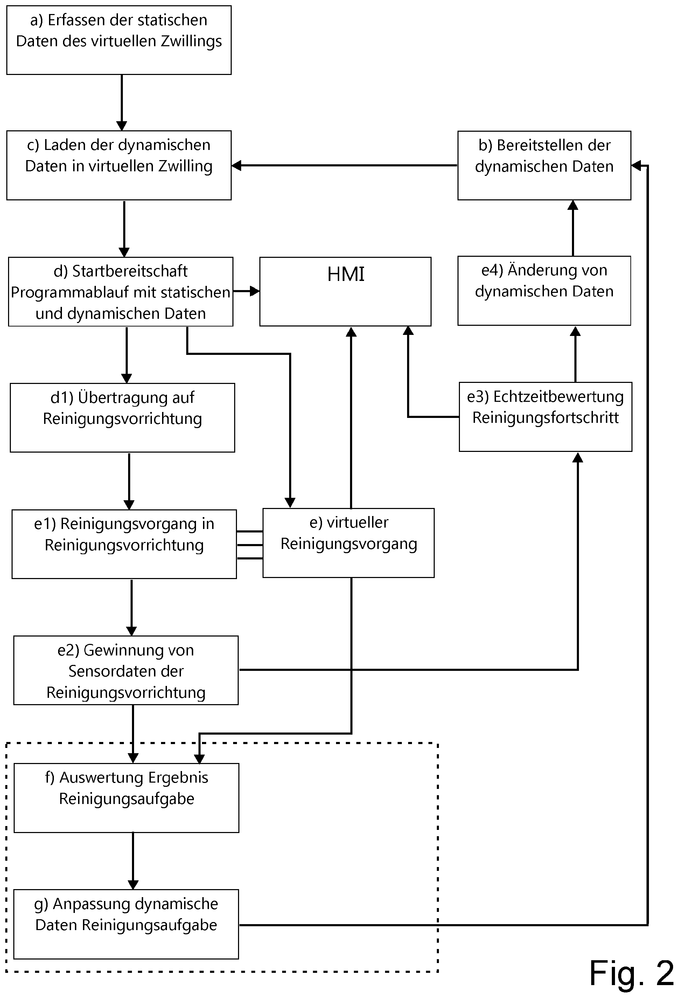

Auf Schritt d) folgt der virtuelle Reinigungsvorgang, als Schritt e) bezeichnet. Dabei läuft der gesamte Reinigungsvorgang im virtuellen Rahmen ab. Eine Unterbrechung und Optimierung einzelner Schritte ist nicht vorgesehen und erweist sich in der Regel nicht als sinnvoll, weil keine außerhalb des erwarteten Bereichs liegenden Ergebnisse während der Simulation auftreten. Dies geschieht erst beim Verfahrensablauf gemäß Fig. 2, wo die tatsächliche Reinigung mitläuft und aus dieser reale Messwerte bzw. Sensordaten einfließen können, auf die dann im Programmablauf reagiert werden kann.

Ist der virtuelle Reinigungsvorgang abgeschlossen, wird das Ergebnis der gesamten Reinigungsaufgabe einer Auswertung gemäß Schritt f) unterzogen. Zeigen sich dabei Defizite, beispielsweise eine unzureichende Reinigung durch Abschattung im Sprühbereich, werden in Schritt g) Parameter bzw. dynamische Daten angepasst. Bei dem vorgenannten Beispiel der Abschattung kann dies dadurch erfolgen, dass die Pose, also die Ausrichtung einer Sprühdüse geändert oder ergänzt wird, um auch abgeschattete Bereiche zu erreichen und dort eine den Erfordernissen entsprechende Reinigung vornehmen zu können.

Die entsprechend angepassten dynamischen Daten werden nun wieder dem Schritt b), der Bereitstellung der dynamischen Daten, zugeführt. Somit kann, unter Zugrundelegung der unveränderten statischen Daten des virtuellen Zwillings, mit aktualisierten dynamischen Daten, die in Schritt c) in den virtuellen Zwilling geladen werden, ein neuer, optimierter virtueller Reinigungsvorgang gestartet und durchgeführt werden.

Fig. 2 zeigt schematisch ein Verfahrensschema einer Ausführungsform des erfindungsgemäßen Verfahrens einer Optimierung des Reinigungsvorgangs in einer realen Reinigungsumgebung unter Einbeziehung des virtuellen Zwillings. Der gezeigte Verfahrensablauf umfasst den zuvor in Fig. 1 beschriebenen, wobei jedoch ein grundlegender Unterschied besteht. Die Reinigung erfolgt nicht nur virtuell sondern zeitgleich auch tatsächlich in einer realen Reinigungsvorrichtung. Dies schließt die Möglichkeit ein, nicht nur das Gesamtergebnis der Reinigung auszuwerten, sondern einzelne Reinigungsschritte in ihrem Ergebnis mittels Sensoren zu erfassen und unmittelbar nachfolgend eine Optimierung dieses betreffenden Reinigungsschritts vorzunehmen, ohne erst den gesamten Reinigungsvorgang ablaufen und das Endergebnis bewerten zu müssen.

Der Programmablauf startet ebenfalls mit Schritt a), dem Erfassen der statischen Daten des virtuellen Zwillings, dem Bereitstellen der dynamischen Daten in Schritt b) sowie deren Laden in den virtuellen Zwilling in Schritt c). Übereinstimmung besteht auch in Schritt d), wenn die Startbereitschaft des Programmablaufs mit den nunmehr vollständigen statischen und dynamischen Daten hergestellt wird.

Die nun vollständigen statischen und dynamischen Daten werden jedoch nicht nur für den Ablauf des virtuellen Reinigungsvorgangs in Schritt e), sondern auch auf die reale Reinigungsvorrichtung übertragen gemäß Schritt d1). In diesem Stadium kann ein paralleler und praktisch im Programmablauf miteinander verschränkter Reinigungsvorgang gestartet werden, wobei dieser sowohl gemäß Schritt e1) in der Reinigungsumgebung, in der während des Reinigungsvorgangs die Reinigungsvorrichtung auf das Reinigungsobjekt einwirkt, als auch in Schritt e) im virtuellen Zwilling als virtueller Reinigungsvorgang abläuft.

Während des Ablaufs des Reinigungsvorgangs in der realen Reinigungsumgebung, vorzugsweise nach einem definierten Reinigungsschritt, werden die dabei in Schritt e2) gewonnenen Sensordaten der Reinigungsvorrichtung einer Auswertung unterzogen. Dies ist die in Schritt e3) vorgenommene Echtzeitbewertung des Reinigungsfortschritts. Zeigen sich hierbei Defizite, beispielsweise durch unzureichend gereinigte Bereiche, wird unmittelbar im Anschluss an die Echtzeitbewertung eine Änderung der betreffenden dynamischen Daten in Schritt e4) vorgenommen. Die geänderten Daten werden dann der Bereitstellung der dynamischen Daten, dann in Form von geänderten dynamischen Daten, in Schritt b) zugeführt.

Zugleich erfolgt, wie grundlegend auch im Verfahrensablauf gemäß Fig. 1, eine Anzeige im HMI. Wenn dort beispielsweise der Reinigungserfolg durch Farbänderungen auf bereits gereinigten Flächen dargestellt wird, so können nun durch Auswertung der Sensordaten der Reinigungsvorrichtung in Schritt e3) auch unzureichend gereinigte Bereiche dokumentiert und verdeutlicht werden, während gleichzeitig durch Änderung der dynamischen Daten eine Abhilfe geboten wird. Neben der Darstellung auf einem Bildschirm ist beispielsweise auch eine haptische Anzeige vorgesehen, sofern ein Bediener involviert ist und durch eine Vibration im Handgriff des Reinigungsgeräts oder auf andere geeignete Weise Hinweise zur Verbesserung des Reinigungserfolgs, wie einer Änderung der Ausrichtung des Reinigungsgeräts, erhalten kann.

Neben der Optimierung einzelner Reinigungsschritte ist auch bei dem in Fig. 2 beschriebenen Verfahrensablauf die Möglichkeit umfasst, das Gesamtergebnis der Reinigungsaufgabe auszuwerten, auch hier in Schritt f). Hierzu werden ebenfalls die Sensordaten, die in Schritt e2) in der Reinigungsvorrichtung gewonnen wurden, herangezogen. Allerdings liegt hier der Fokus auf der Optimierung der einzelnen Reinigungsschritte, die auf kürzerem Wege erfolgt und zu einer schnelleren Optimierung führt. Daher ist die Auswertung der gesamten Reinigungsaufgabe und die daraus resultierende Anpassung der dynamischen Daten als optional in einem gestrichelten Kasten dargestellt.

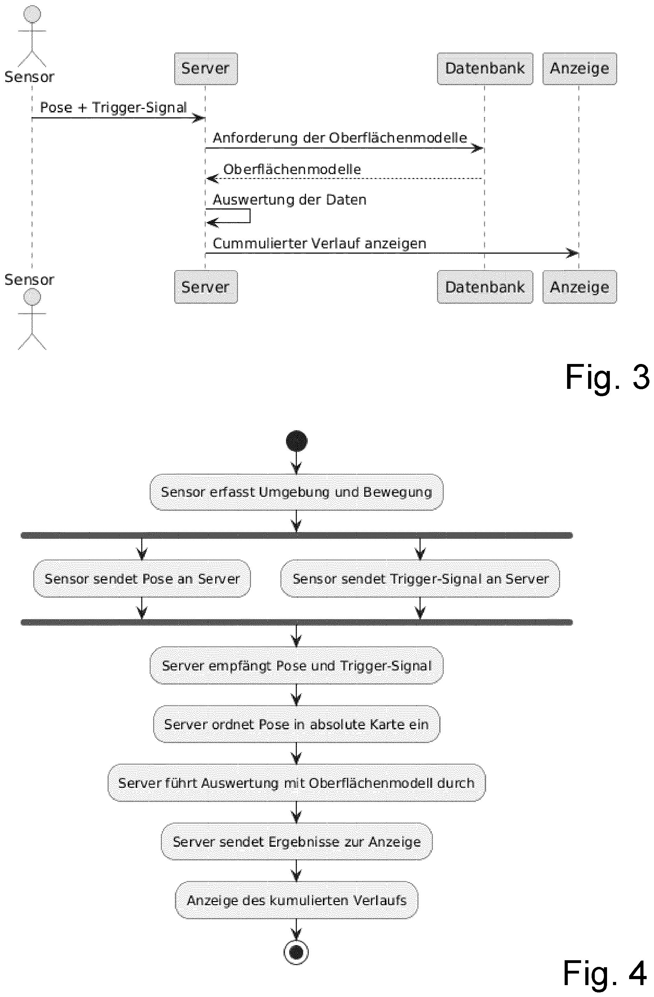

Fig. 3 zeigt schematisch ein Verfahrensschema einer Ausführungsform des erfindungsgemäßen Verfahrens einer Optimierung des Reinigungsvorgangs mit einem mobilen Reiniger. Dabei ermittelt ein Sensor im Handgerät eines mobilen Reinigers dessen Pose, also Position und Ausrichtung, um diese Werte an einen Server (System zur Datenverarbeitung) zu übermitteln. Die Anforderungen der Oberflächenmodelle werden sodann vom Server an eine Datenbank übermittelt, wobei diese Modelle dann in der Datenbank vorliegen und vom Server bei Bedarf abgerufen werden können. Dies geschieht beispielsweise zum Zweck der Auswertung der vom Sensor gewonnenen Daten. Der kumulierte Verlauf des gesamten Vorgangs wird dann einschließlich der zuvor vorgenommenen Auswertung einer Anzeige (HMI) zugeführt, um das Ergebnis visuell oder auf andere Weise (z. B. haptisch oder akustisch) nachvollziehbar darzustellen.

Fig. 4 zeigt schematisch ein Verfahrensschema in andersgearteter Darstellung einer weiteren Ausführungsform des erfindungsgemäßen Verfahrens einer Optimierung des Reinigungsvorgangs mit einem mobilen Reiniger, wobei der Verfahrensablauf im Unterschied zu Fig. 3 fortlaufend dargestellt ist. Der Ablauf beginnt mit der Erfassung der Umgebung und der zugehörigen Bewegung durch einen Sensor. Nachfolgend wird zugleich die Pose, also Position und Ausrichtung des Reinigungsgeräts, an den Server gesendet. Zugleich übermittelt der Sensor ein Triggersignal an den Server. Im darauffolgenden Verfahrensschritt empfängt der Server beide Daten, Pose und Triggersignal.

Nachfolgend ordnet der Server die Pose in eine absolute Karte ein, setzt also die Position und Ausrichtung des Reinigungsgeräts in Beziehung beispielsweise zum 3D-Modell des Reinigungsobjekts. Nachfolgend führt der Server eine Auswertung aus und nutzt dazu das gespeichert vorliegende Oberflächenmodell. Im Anschluss an die Auswertung sendet der Server die Ergebnisse zu einer Anzeige, auf der dann der kumulierte Verlauf dargestellt wird.

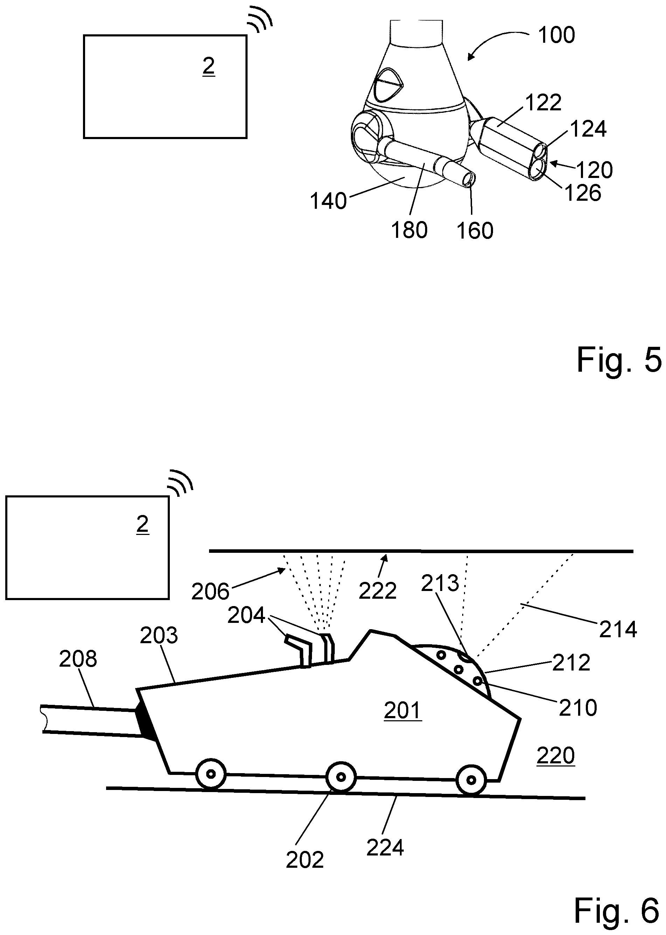

Fig. 5 zeigt schematisch eine perspektivische Ansicht einer Ausführungsform einer Reinigungsvorrichtung, ausgeführt als stationäres Reinigungssystem, speziell einen Tankreiniger 100. Zu dieser Kategorie der stationären Reinigungssysteme würde ebenfalls eine Förderbandreinigung mittels Düsenstock, aber auch Reinigungssysteme in Abfüllanlagen mit Schwallreinigern zählen.

Zunächst muss die Geometrie der zu betrachtenden Objekte in den virtuellen Zwilling im Server 2 geladen werden. Dies kann auf verschiedene Weise erfolgen:
- Einlesen von Konstruktionsdaten (CAD-Daten, beispielsweise eine STEP-Datei)
   - Zum Beispiel ein Tank wird als STEP-Datei hineingeladen,
   - Umfasst auch vereinfachte Geometrien als Oberflächen- oder Volumenmodelle;
- 3D-Scan der Umgebung (Oberflächen- oder Volumenmodell);
- Abstraktion aus aufgenommenen Bildern, d. h. dass beispielweise ein Tank als Zylindermodell angenähert wird, die aufgenommenen Bilder auf die Zylinderoberfläche projiziert werden, damit dort erkenntlich wird, wo sich Einbauten wie Mannlöcher oder Stutzen befinden, die beim Reinigungsvorgang besondere Herausforderungen darstellen.

Anschließend wird mit Hilfe von optischer Verschmutzungssensorik 120 oder anderer Sensorik (Spektroskopie, QCM etc.), die den lokalen Verschmutzungsgrad bestimmen kann, die ortsaufgelöste Verschmutzung erkannt und in den digitalen Zwilling geladen. Hierzu weist der Tankreiniger 100 einen zur Analyse des gesamten Innenraums des Tanks geeigneten, beweglichen Sensorarm 122 auf, an dem die Verschmutzungssensorik 120 angeordnet ist, die eine Lichtquelle 124 und einen Verschmutzungssensor 126 aufweist.

Zur Optimierung wird anhand des bekannten ortsaufgelösten Verschmutzungsgrads eine Vorgabe für die Reinigung erstellt. Diese kann folgende Ausgangsparameter umfassen:
- Reinigungsmittelchemie;
- Wasser- bzw. Reinigungsmitteldruck;
- Bewegungsbahn der Reinigung;
- Abfolge der Reinigung.

Entsprechend den Vorgaben wird durch die Steuerung, durch den Server 2, das Reinigungsmittel aus der Düse 160 abgegeben. Die Düse 160 ist am Ende des Düsenarms 180 angeordnet, der um eine horizontale Achse schwenkbar mit dem um eine vertikale Achse drehbaren Rotationskopf 140 des Tankreinigers 100 verbunden ist.

Dabei erfolgt im Server 2 sowohl der rein virtuelle Reinigungsvorgang gemäß dem in Fig. 1 dargestellten Verfahrensablauf als auch der kombiniert virtuell-real durchgeführten Reinigungsvorgang gemäß Fig. 2 mit der entsprechenden Rückwirkung auf den Tankreiniger 100.

Fig. 6 zeigt schematisch eine Seitenansicht einer Ausführungsform einer Reinigungsvorrichtung, ausgeführt als autonomes mobiles Reinigungsgerät 201, das ein Fahrwerk 202 sowie ein Gehäuse 203 aufweist. An dem Gehäuse 203 ist eine Düsenanordnung zu 104 mit einem nach oben gerichteten Reinigungsstrahl 206 gezeigt. Wobei das Reinigungsmittel für den Reinigungsstrahl 206 durch den Versorgungsschlauch 208 zugeführt wird.

Um den Reinigungserfolg detektieren zu können, ist eine Beleuchtungseinrichtung 210 vorgesehen, die eine Sensorik 213 unterstützt, sodass im Beobachtungsbereich 214 Verschmutzungen detektiert werden können. Der Einsatz des Reinigungsgeräts 201 erfolgt in einem Anwendungsraum 220, dessen Oberflächen 222 gereinigt werden und durch den es auf einer Schienenbahn 224 bewegt wird.

Das autonome mobile Reinigungsgerät gehört zur Gruppe der robotischen bzw. automatisierten mobilen Reinigungssysteme. Robotische bzw. automatisierte mobile Reinigungssysteme umfassen mindestens einen Reinigungsroboter. Dieser kann in zwei Varianten agieren. Variante 1 kann sich frei in der Produktionsumgebung bewegen und konzentriert sich auf die Reinigung von externen Maschinenoberflächen, Fußböden, Wände und Deckenbereich, die er autonom anfährt. Variante 2 fährt auf einer Transporteinrichtung (z. B. einem Förderband) durch Produktionsanlagen hindurch, entweder selbstständig oder fremdangetrieben (z. B. durch das Förderband) und reinigt diese von innen heraus.

Beide Systeme verfügen über Lokalisierungssensorik, um Ihre jeweilige Umgebung wahrzunehmen (z. B. Radar-, LIDAR-, Ultraschall-, TOF-, Induktionssensorik) und die eigene Position zu den reinigungsrelevanten Elementen zu ermitteln. Zusätzliche Verschmutzungssensorik ermöglicht die orts- und zeitaufgelöste Erfassung (z. B. mittels Fluoreszenz- und Weißlichtdetektion) der zu entfernenden Verschmutzungen.

Als beispielhafte relevante Reinigungsparameter können folgende Aspekte vom System ermittelt (teils kontinuierlich als dynamische Daten, teils als initialer Input als statische Daten) werden:
- Initial (statisch):
   ∘ Düseneigenschaften (Düsenart, Sprühwinkel, Volumenstrom).
- Kontinuierlich (dynamisch):
   ∘ Position der Düse im Raum,
   ∘ Verschmutzungsgrad/-verteilung,
   ∘ Prozessdruck (Fluidleitung Reinigungsmittel),
   ∘ Verwendete Reinigungschemie inkl. Konzentration,
   ∘ Temperatur.

Die Verschmutzungs- und Reinigungsmodelle sind so beschaffen, dass sie für jede Verschmutzung ein eigenes Profil anlegen. Diese können entweder vorgegeben (z. B. bekannte Produkte, die regelmäßig die betreffende Anlage passieren und den Großteil der Verschmutzung ausmachen), aber auch selbstlernend klassifiziert und abgespeichert werden. Das System lernt dann kontinuierlich, mit welchen Reinigungsparametern, den dynamischen Daten im Sinne der Erfindung, die jeweilige Verschmutzung entfernt werden kann.

Dabei kann es mehrere Optimierungsziele geben, z. B. besonders schnell oder besonders effizient und ressourcensparend. Es findet also ein permanenter Abgleich zwischen den Reinigungs- bzw. Verschmutzungsmodellen und dem erkannten IstZustand statt. Dies alles ist Teil des computerimplementierten Verfahrens oder implementiert als Computerprogramm bzw. des digitalen (Reinigungs-)Zwillings, welcher darüber hinaus noch die 3D-Daten der Produktionsumgebung und Maschinen enthalten kann. So können z. B. Verschmutzungsdaten (Art, Menge, Antrocknungsgrad etc.) oder Reinigungsinformationen (Volumenstromauftrag pro Fläche, Reinigungsparameter etc.) direkt auf der Oberfläche des 3D-Modells "gemapped" (kartographiert) und somit ortsbezogen abgespeichert und bei Bedarf auch über den Benutzer wieder abgerufen werden können.

Unter Nutzung all dieser Parameter und Aspekte kann letztlich ein selbstoptimierender Reinigungsvorgang erreicht werden. Diese Selbstoptimierung kann entweder intelligent, insbesondere KI-basiert ablaufen oder aber anhand zuvor festgelegter Optimierungskriterien und -regeln als regelbasierter Steuerkreis gestaltet werden. Anhand der beiden Ausführungsvarianten sollen die zuvor beschriebenen Aspekte in einem beispielhaften Reinigungsdurchgang erklärt werden.

Variante 1: Zu Beginn der Reinigung erfolgt zunächst eine Referenz- und Detektionsfahrt. Hierbei wird die gesamte relevante Reinigungs- und Produktionsumgebung abgefahren und der vorhandene Verschmutzungszustand erfasst sowie ortsbezogen im virtuellen Zwilling hinterlegt. Basierend darauf können zwei Ansätze verfolgt werden. Ansatz A: der Roboter fährt die Reinigungsumgebung nach einem zuvor fest einprogrammierten Muster ab und arbeitet die Oberflächen und insbesondere die erkannten Restverschmutzungen mittels regelbasiertem Steuerkreis ab (z. B. Kriterium "reinige bis Stelle sauber"). Die Stelle wird iterativ immer wieder besprüht und ein Sensor begutachtet, bis das Kriterium erreicht ist, erst danach wird der Reinigungsvorgang an anderer Stelle fortgesetzt. Eine Variationsmöglichkeit ist hier, zunächst ein Standardreinigungsschema abzuarbeiten, im Anschluss zu detektieren und nur die noch restverschmutzten Flächen iterativ nachzureinigen. Ansatz B: hierbei wird KI-basiert ein intelligenter Reinigungsablauf ermittelt, welcher die zugrundeliegende 3D-Karte der Umgebung sowie Reinigungs- und Verschmutzungsmodelle der erkannten Restverschmutzungen einbezieht. So können vorab geeignete Reinigungsparameter und -zeiträume abgeschätzt bzw. simuliert werden und ggfs. in einem Großteil der Schritte sofort ein effizienter Reinigungserfolg erzielt werden. An den Stellen, an denen dies dennoch nicht der Fall ist, reinigt das System automatisch nach und lernt bzw. adaptiert kontinuierlich die Parameter (z. B. Reinigungszeit oder -intensität) von Reinigung zu Reinigung. Am Ende der Reinigung werden jegliche Ergebnisse, inkl. der initialen Detektionsergebnisse, der finalen Detektionsergebnisse, Reinigungsparameter etc. für die weitere Dokumentation (z. B. zum Abruf bei Audits o. ä.) im digitalen Reinigungsvorgang abgelegt.

Es ist vorgesehen, dass im Server 2 sowohl der rein virtuelle Reinigungsvorgang gemäß dem in Fig. 1 dargestellten Verfahrensablauf als auch dem kombiniert virtuell-real durchgeführten Reinigungsvorgang gemäß Fig. 2 mit der entsprechenden Rückwirkung auf das Reinigungsgerät 201 erfolgt.

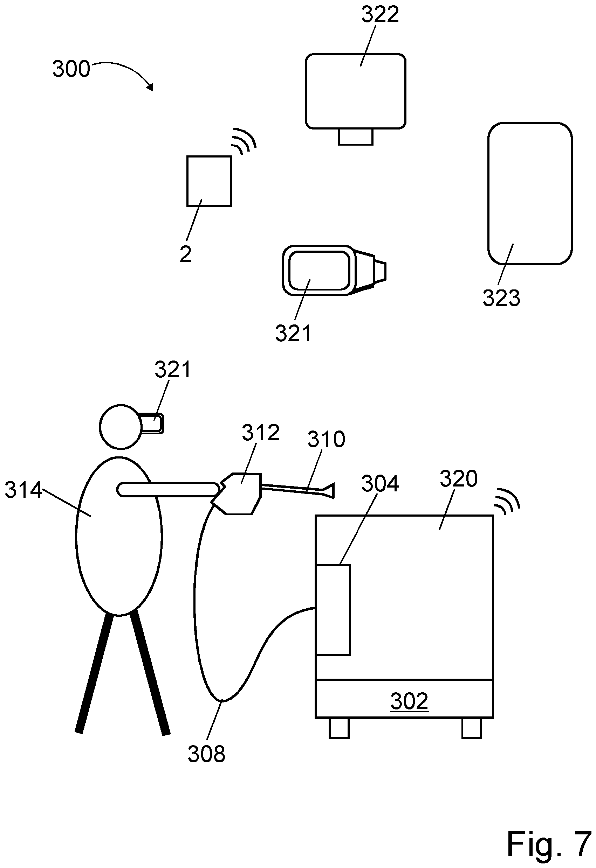

Fig. 7 zeigt eine schematische Ansicht einer Ausführungsform einer Reinigungsvorrichtung, ausgeführt als manuelles mobiles Reinigungssystem 300.

Das Reinigungssystem 300 erfasst die Pose, die Position und die Orientierung, des als Sprühlanze 310 ausgeführten Reinigungsgeräts und schickt diese Informationen an den Server 2, welcher die Daten verarbeitet und schlussendlich die gewünschte Information auf einem Endgerät, beispielsweise einer VR- oder AR-Brille 312, dem Bildschirm 322 eines Computers oder auf einem Smartphone 323 darstellt. Die Sprühlanze 310 ist mit einer Zentraleinheit 320 verbunden und erhält von dieser zumindest die nötige Energie und das Reinigungsmittel über den Versorgungsschlauch 308 zugeführt.

In der Vorbereitung wird zu einem definierten Null-Punkt bzw. Koordinatenursprung ein Modell als Basis für die Simulation erstellt. Dieses Modell kann auf Basis von 3D-Scans oder CAD oder Zeichnungssätzen insbesondere des Reinigungsobjekts erstellt werden. Das Modell kann voxel- oder oberflächen- oder parametrisch basiert sein. Voxel bezeichnet in der Computergrafik einen Gitterpunkt in einem dreidimensionalen Gitter, analog zum Pixel in einem 2D-Bild, einer Rastergrafik.

Optional wird dieses erstellte Modell als Karte für etwaige Sensoren bzw. den Localization Part des Sensors verwendet. Ansonsten wird eine entsprechende "Karte", ein 3D-Modell des Reinigungsobjekts, mit gleichem Null-Punkt oder bekannten Bezug zum dem Null-Punkt des Modells erstellt und für den Sensor verwendet.

Im Betrieb findet sich die Sprühlanze 310 bzw. das zu trackende Objekt absolut im Raum wieder. Die notwendige Berechnung kann entweder auf einem Prozessor der Sprühlanze 310 selbst oder auf dem Server 2 erfolgen. Die Daten können live von der Sprühlanze 310 mit Zeitversatz entweder in *chunks* oder direkt oder nachträglich im Ganzen an den Server zur Auswertung übertragen werden. Ein Chunk ist die größte Einheit an physischem Plattenspeicher, die zur Datenspeicherung durch den Datenbankserver zugeordnet wird.

Der Server 2 verarbeitet die Daten und erzeugt auf Basis der Simulation einen zeitlich und örtlich aufgelösten Reinigungsverlauf. Dies wird in verschiedener Art und Weise visualisiert, wie nachfolgend beschrieben.

Für die Ermittlung der "Pose" ist wenigstens ein Sensor bzw. eine Sensoranordnung erforderlich, nachfolgend wird die entsprechende Sensoranordnung als Posesensor 312 bezeichnet. Der Posesensor 312 gehört zur Lokalisierungssensorik, wie sie eingangs bei der Definition von robotischen bzw. automatisierten mobilen Reinigungssystemen bezeichnet wurde. Geeignete Basistechnologien für Positionsbestimmung sind nachfolgend aufgeführt. Mit zwei Positionen lässt sich auch eine Orientierung berechnen. Manche Verfahren ermöglichen eine direkte, andere nur eine indirekte Positions- und Orientierungsbestimmung. Die Erfindung benötigt ein absolutes zeitlich aufgelöstes Signal zu einem Referenzpunkt. Dieser Referenzpunkt wird in der Simulation genutzt.

Übersicht über als Posesensor 312 einsetzbare Positions-Messsysteme:
1. Laufzeitmessung (Time-of-Flight Measurement)
   a. Direkte Laufzeitmessung (Satellitenbasierte Systeme (z.B. GNSS); Funkbasierte Systeme (z.B. Ultrabreitband); Optische Systeme (z. B. Lichtimpuls-basierte Sensoren)
   b. Indirekte Laufzeitmessung (Laser-basierte Systeme (z.B. LIDAR); Radarbasierte Systeme)
2. Winkel- und Bewegungsmessung
   a. Optische Tracking-Systeme (markerbasierte und markerlose Systeme)
   b. Inertiale Messsysteme (Gyroskope; Beschleunigungssensoren; Magnetometer - räumliche Kombination mehrerer Inertialsensoren wie Beschleunigungssensoren)
3. Bildbasierte Positionsbestimmung
   a. Visuelle Odometrie (Monokulare Systeme; Stereo-Systeme - Methode der Schätzung von Position und Orientierung (Lageschätzung) eines mobilen Systems anhand der Daten seines Vortriebsystems)
   b. Simultaneous Localization and Mapping (SLAM) (Visual SLAM; Monokulares SLAM; Stereo SLAM; LiDAR SLAM; Kombination)
4. Hybride und Fusionssysteme
   a. GNSS + Inertiale Messsysteme
   b. LiDAR + Kamera-Systeme
   c. Visual-Inertial Odometrie
5. Sonstige Methoden
   a. Trilateration und Triangulation
   b. Fingerprinting (z.B. für WLAN-basierte Indoorpositionierung)
   c. Ultraschall-basierte Systeme

Das manuelle mobile Reinigungssystem 300 vollzieht die lokale Erfassung und Vorverarbeitung der Daten. Es besteht aus einer Auswerteinheit 302 (Computer oder SingleBoardPC oder Microcontroller oder FPGA oder kombiniert) mit Stromversorgung (über Kabel oder mit Akku oder Batterie) mit einer weiteren Sensoranordnung 304, die im vorliegenden Ausführungsbeispiel Durchfluss, Reinigungsmodus, Trigger-Signal detektieren. Weiterhin ist eine optionale Verbindung zu weiteren nicht dargestellten immobilen Reinigungsstationen (CIP-Stations) vorgesehen. Die Daten werden dann zum Server 2 übertragen.

Im Server 2 erfolgt eine Vorverarbeitung der Messdaten der eingesetzten Sensoren, sowohl der Daten des Posesensors 312 als auch der Sensoranordnung 304. Dies kann direkt in der Auswerteeinheit 302 erfolgen, alternativ im Nachgang auf dem Server 2, nachdem die von den Sensoren, dem Posesensor 312 und der Sensoranordnung 304, ermittelten Daten zu diesem übermittelt worden sind. In dem dargestellten Ausführungsbeispiel erfolgt die Übertragung drahtlos.

Sensoren haben verschiedene Datenraten und Qualitäten. Diese sind jeweils in ihrem Verlauf und in der gemeinsamen Kombination zu bewerten, um ein besseres Signal zu erhalten, ohne dabei zu viele Einbußen hinsichtlich Genauigkeit und Sensitivität zu erleiden. Dies wird nach dem Ausführungsbeispiel folgendermaßen realisiert:
B. Vorverarbeitung von Positions- und Orientierungsdaten
   a. Datenbereinigung (Ausreißererkennung und -entfernung; Rauschunterdrückung)
   b. Koordinatentransformation (a) Lokale zu globalen Koordinaten; b) Euler-Winkel zu Quaternionen)
C. Mittelungsmethoden
   a. gleitende Mittelwerte
   b. Kalman-Filter (Erweiterter Kalman-Filter (EKF); Unscented Kalman-Filter (UKF))
D. Sensorfusion für AR
   a. IMU und absolute Positionierung (Komplementärfilter; Kalman-Filterbasierte Fusion)
   b. visuelle und inertiale Fusion (Visual-Inertial Odometrie; SLAM (Simultaneous Localization and Mapping))
E. AR-spezifische Techniken
   a. markerbasierte Tracking-Systeme (Optische Marker (Fiducial Marker); Infrarot-Marker; Data-Matrix Codes)
   b. markerlose Tracking-Systeme (Feature-basiertes Tracking; modellbasiertes Tracking)
   c. Hybride Systeme (IMU + Kamera; IMU + UWB (Ultra-Wideband))
F. Fortgeschrittene Verarbeitungstechniken
   a. künstliche Intelligenz für Pose-Estimation (Neuronale Netze zur Posenschätzung; Deep Learning für Objekterkennung und Tracking)
   b. Fehlerschätzung und -korrektur (Online-Bias-Schätzung; Drift-Korrektur durch absolute Referenzen)

Die Übertragung der Daten erfolgt drahtlos, kann alternativ aber auch über eine Datenleitung erfolgen. Gegebenenfalls wird eine effiziente Serialisierung und Übertragung der Daten in einer strukturierten Weise mit Nutzung aktueller Technologie vorgenommen. Vorzugsweise erfolgt dies durch ROS2 mittels DDS, was in der nachfolgenden Übersicht dargestellt ist:
A. Datenserialierung
   a. Textbasierte Formate (JSON (JavaScript Object Notation); XML (eXtensible Markup Language); YAML (YAML Ain't Markup Language))
   b. Binäre Formate (Protocol Buffers (protobuf); MessagePack BSON (Binary JSON); FlatBuffers)
   c. Schemabasierte Serialisierung (Apache Avro; Apache Thrift)
B. Übertragungsprotokolle
   a. Publish-Subscribe-Modelle (MQTT (Message Queuing Telemetry Transport); AMQP (Advanced Message Queuing Protocol); DDS (Data Distribution Service))
   b. Request-Response-Modelle (HTTP/HTTPS; gRPC (gRPC Remote Procedure Call); REST (Representational State Transfer))
   c. Streaming-Protokolle (WebSocket; Real-Time Transport Protocol (RTP); RealTime Control ProtoCol (RTCP); Real Time Messaging Protocol (RTMP); WebRTC; )"MultiCasting"
C. Allgemeine Messaging-Systeme (Apache Kafka; RabbitMQ; NATS)
D. Effizienzsteigerung und Optimierung
   a. Datenkompression (GZIP; LZ4; Snappy)
   b. Netzwerkoptimierung (UDP-basierte Protokolle für Echtzeit-Daten; Multiplexing (z. B. HTTP/2); Load Balancing)
   c. Caching-Strategien (In-Memory-Caching; Distributed Caching)
   d. Sicherheit und Integrität (Verschlüsselung: TLS/SSL, End-to-End-Verschlüsselung; Authentifizierung und Autorisierung: OAuth 2.0, JWT (JSON Web Tokens); Datenintegrität: Checksummen, Digitale Signaturen)

Ein weiterer Schritt betrifft die Auswertung der Daten, wie in Fig. 1 dargestellt, nach Abschluss des Reinigungsvorgangs, oder nach einem Reinigungsschritt gemäß Fig. 2, soweit die reale Reinigungsvorrichtung angebunden ist und einen Reinigungsvorgang durchführt.

Die Auswertung erfolgt durch Simulation auf Basis der statischen Daten der Sprühlanze 310 und des Reinigungsobjekts, weiterer dynamischer Daten und im Vorfeld erstellter Modelle (experimentelle Methoden zur Ermittlung des Sprühverhaltens der Sprühlanze 310 bei dem ausgewählten Medium oder auch CFD usw.). Hierbei werden in der Simulation verschiedene Technologien angewandt. Dies können Raytracing, Shader (zum Problem "Schattenwurf") sein, genauso wie CFD, Partikelsimulation, FEM, analytische und hybride Methoden zur Berechnung der zeitlich aufgelösten Volumenstromverteilung und/oder des Impacts des Reinigungsmittels bezüglich der Oberfläche. Auf Basis dieser Daten lässt sich eine Vielzahl von abgeleiteten Kenngrößen erstellen und auch visualisieren, wie z. B. "ausreichende Desinfektionseinwirkung" in bestimmten Zonen.

Zur Evaluierung des Reinigungsvorgangs, im Anschluss an einen Reinigungsschritt oder nach Abschluss des realen oder virtuellen Reinigungsvorgangs, aber auch zur Schulung von Bedienern, erfolgt eine Visualisierung der Daten der Sprühlanze 310 sowie auch anderer verfügbarer Daten. Diese verarbeiteten Informationen können zu den vorgenannten Zwecken aufbereitet dem Benutzer auf verschiedenen Endgeräten dargestellt werden oder als Protokoll abgespeichert werden. Dabei ist es nach einer vorteilhaften Ausführungsform auch vorgesehen, den Bediener als Avatar darzustellen, der die Sprühlanze 310 führt und in die entsprechenden Positionen bringt.

Das Protokoll kann den gesamten Reinigungsverlauf inklusive der Bewegung der Sprühlanze 310 darstellen oder auch eine Zusammenfassung enthalten, wie z. B. "Desinfektionswirkung auf Anlage" statt "zeitlich aufgelöster Desinfektionsverteilung der Anlage" oder nur das qualitative Resultat "Anlage ausreichend desinfiziert".

### Bezugszeichenliste

- 2: System zur Datenverarbeitung, Computer, Server
- 100: Tankreiniger
- 120: Verschmutzungssensorik
- 122: Sensorarm
- 124: Lichtquelle
- 126: Sensor, Verschmutzungssensor
- 140: Rotationskopf
- 160: Reinigungsgerät, Düse
- 180: Düsenarm
- 201: Reinigungsgerät
- 202: Rad, Fahrwerk
- 203: Gehäuse
- 204: Reinigungsgerät, Düsenanordnung
- 206: Reinigungsmittel, Reinigungsstrahl
- 208,308: Versorgungsschlauch
- 210: Beleuchtungseinrichtung
- 212: Einrichtung zur Positionsbestimmung
- 213: Sensor, Sensorik
- 214: Beobachtungsbereich
- 220: Anwendungsraum
- 222: Reinigungsobjekt, Oberfläche
- 224: Schienenbahn
- 300: manuelles mobiles Reinigungssystem
- 302: Auswerteeinheit
- 304: Sensor, Sensoranordnung
- 310: Reinigungsgerät, Sprühlanze
- 312: Sensor, Posesensor
- 314: Bediener
- 320: Zentraleinheit
- 321: HMI, AR-/VR-Brille
- 322: HMI, Computerbildschirm
- 323: HMI, Smartphone

## Patentansprüche

1. Computerimplementiertes Verfahren zur Überwachung und Optimierung der Erfüllung einer Reinigungsaufgabe, die wenigstens einen Reinigungsschritt umfasst, sowie zur Prognose eines Reinigungsergebnisses an einem Reinigungsobjekt (222) mittels eines virtuellen Zwillings einer Reinigungsumgebung, die das Reinigungsobjekt (222) und eine Reinigungsvorrichtung (100, 201, 300) umfasst, **dadurch gekennzeichnet, dass** die Reinigungsaufgabe virtualisiert in dem virtuellen Zwilling ausgeführt wird, das Verfahren umfassend die Schritte:
a. Erfassung von statischen Daten der Reinigungsumgebung zur Bildung einer statischen Grundstruktur des virtuellen Zwillings;
b. Bereitstellen von dynamischen Daten der Reinigungsumgebung,
c. Laden der dynamischen Daten in den virtuellen Zwilling zur Bildung einer dynamischen Arbeitsstruktur;
d. vollständige statische und dynamische Daten führen zur Startbereitschaft des Programmablaufs des Reinigungsvorgangs;
e. Initiieren des virtuellen Reinigungsvorgangs im virtuellen Zwilling;
f. Auswerten des Reinigungserfolgs nach Ablauf der Reinigungsaufgabe anhand der im virtuellen Zwilling generierten Daten;
g. Anpassung und Änderung der dynamischen Daten im Ergebnis der Bewertung;

2. Verfahren nach Anspruch 1, wobei die Reinigungsaufgabe parallel in der Reinigungsumgebung, die die Reinigungsvorrichtung (100, 201, 300) umfasst, und virtualisiert in dem virtuellen Zwilling ausgeführt wird, umfassend die zusätzlichen Schritte im Anschluss an Schritt d):
• Schritt d1) Übertragung zumindest der dynamischen Daten auf die Reinigungsvorrichtung (100, 201, 300);
• Schritt e1) Ausführen des wenigstens einen Reinigungsschritts in der Reinigungsumgebung, umfassend die Reinigungsvorrichtung (100, 201, 300), zeitgleich und parallel mit dem Ablauf des wenigstens einen Reinigungsschritts des virtuellen Reinigungsvorgangs im virtuellen Zwilling;
• Schritt e2) Gewinnung von Sensordaten aus der Reinigungsvorrichtung (100, 201, 300) während des Ablaufs des wenigstens einen Reinigungsschritts;
• Schritt e3) Übertragung der Sensordaten zur Echtzeitbewertung des Reinigungsfortschritts im aktuellen Reinigungsschritt durch Verknüpfung der Sensordaten und der parallel im virtuellen Zwilling generierten Daten;
• Schritt e4) Anpassung und Änderung von dynamischen Daten in Abhängigkeit von der Bewertung in Schritt e3);
• gefolgt von einem erneutem Ablauf von Schritt b) und folgenden zur Optimierung des aktuellen Reinigungsschritts.

3. Verfahren nach Anspruch 1 oder 2, wobei wenigstens ein erneuter Ablauf der Schritte b) bis g) zur Optimierung der gesamten Reinigungsaufgabe erfolgt.

4. Verfahren nach einem der vorherigen Ansprüche, wobei die dynamischen Daten:
a. Positionen und/oder Bewegungen wenigstens
i. eines Reinigungsobjekts (222), umfassend eine zu reinigende Oberfläche und/oder ein zu reinigendes Objekt,
ii. einer Reinigungsvorrichtung (100, 201, 300), umfassend ein Reinigungsgerät (160, 204, 310),
iii. eines Manipulators, wobei der Manipulator einen Roboter, eine Drohne und/oder einen Bediener (314) umfasst,
b. Eigenschaften und Anwendungsrestriktionen eines Reinigungsmittels (206);
c. Bereiche zur Zuordnung von spezifischen Reinigungsabläufen, umfassend Bereiche ohne Reinigung und Bereiche intensiver Reinigung;
d. Sensordaten, ermittelt beim Betrieb der Reinigungsvorrichtung (100, 201, 300);
e. Abstand zwischen Reinigungsgerät (160, 204, 310) und Oberfläche (222);
f. Aufprallwinkel, Druck, Temperatur und/oder Volumenstrom des Reinigungsmittels (206)
umfassen.

5. Verfahren nach einem der vorherigen Ansprüche, wobei die dynamischen Daten weiterhin Daten für ein Aufbringen simulierter virtueller Verschmutzungen auf spezifische Bereiche des Reinigungsobjekts (222) umfassen.

6. Verfahren nach einem der vorherigen Ansprüche, wobei die dynamischen Daten weiterhin ein Anwenden von virtuellen Reinigungsmitteln mit zugeordneten Eigenschaften und vorgegebenen Anwendungsrestriktionen umfassen.

7. Verfahren nach einem der vorherigen Ansprüche, wobei der Umfang der dynamischen Daten vorausgegangene reale Reinigungsabläufe der Reinigungsvorrichtung (100, 201, 300) umfasst, die durch Sensoren (126, 213, 304, 312) der Reinigungsvorrichtung (100, 201, 300) aufgenommen wurden und/oder als Programmablauf der Steuerungseinrichtung der Reinigungsvorrichtung (100, 201, 300) vorliegen.

8. Verfahren nach einem der vorherigen Ansprüche, wobei die Erfassung der statischen Daten des virtuellen Zwillings als Abbild der Reinigungsumgebung mittels eines computerimplementierten Verfahrens erfolgt, umfassend die Schritte
a. Ermitteln und Digitalisieren wenigstens eines Reinigungsobjekts (222) als 2D-oder 3D-Struktur;
b. Definition von Bereichen zur Zuordnung von spezifischen Reinigungsabläufen ohne Reinigung, intensive Reinigung, Einwirkzeit in der 2D-oder 3D-Struktur;
c. Einbeziehen von Zusatzinformationen.

9. Verfahren nach Anspruch 8, wobei als Zusatzinformationen wenigstens eine der folgenden Informationen vorgesehen ist:
a. KI-basierte Informationen in Bezug zu der Reinigungsaufgabe;
b. regelbasierte Steuerungsschritte der Reinigungsvorrichtung (100, 201, 300);
c. Maschinen-, Experten-, Düsendatenbanken und -programme der Reinigungsvorrichtung (100, 201, 300);
d. Bewegungsmuster von Robotiksystemen;
e. Messwerte aus Sensoren (126, 213, 304, 312), Kamerabilder;
f. weitere 2D- oder 3D-Daten von Objekten in der Reinigungsumgebung;
g. weitere Mess- und Vorgabewerte in der Reinigungsumgebung;
h. manuell implementiertes Expertenwissen in Bezug zu der Reinigungsaufgabe;
i. menschliche Bewegung in der Reinigungsumgebung.

10. Verfahren nach Anspruch 9, wobei das manuell implementierte Expertenwissen maschinenseitig zufließt und dabei Restriktionen des Reinigungsobjekts (222) umfasst und/oder verfahrenstechnisch zufließt und dabei Restriktionen des in Bezug auf das Reinigungsobjekt (222) durchgeführten Verfahrens umfasst.

11. Verfahren nach Anspruch 9 oder 10, wobei die Düsendatenbanken und -programme Strahlgeometrien und Strömungsverhältnisse von Düsen (160, 204) der Reinigungsvorrichtung (100, 201, 300) abbilden, aus denen das Reinigungsmittel (206) auf das Reinigungsobjekt (222) abgegeben wird.

12. Verfahren nach einem der vorherigen Ansprüche, wobei im virtuellen Zwilling eine Definition von Ausgabesignalen zur Anzeige von Betriebszuständen auf wenigstens einem HMI (321, 322, 323) erfolgt.

13. Verfahren nach einem der vorherigen Ansprüche, wobei die Reinigungsvorrichtung ausgeführt ist als
a. ein stationäres Reinigungssystem (100) oder
b. ein manuelles, mobiles Reinigungssystem (300) oder
c. ein robotisches, automatisiertes mobiles Reinigungssystem (201).

14. System zur Datenverarbeitung (2), umfassend Mittel zur Ausführung des Verfahrens nach einem der Ansprüche 1 bis 13.

15. Computerprogramm, umfassend Programmbefehle, die bei der Ausführung durch einen Computer (2) diesen veranlassen, das Verfahren nach einem der Ansprüche 1 bis 13 auszuführen.
